# EUROPEAN PATENT APPLICATION

(11) **EP 4 311 331 A1**
(43) Date of publication of application: **24.01.2024**
(21) Application number: 21931695.7
(22) Date of filing: 05.11.2021
(51) Int. Cl.: H04W 72/04, H04W 72/12, H04L 27/26, H04L 1/16, H04W 28/04

(54) **TERMINAL, BASE STATION AND COMMUNICATION METHOD**

(30) Priority: 15.03.2021 JP 2021041316
(71) Applicant: Panasonic Intellectual Property Corporation of America, Torrance, CA 90504 (US)
(72) Inventor: YAMAMOTO, Tetsuya, Kadoma-shi, Osaka 571-0057 (JP); SUZUKI, Hidetoshi, Kadoma-shi, Osaka 571-0057 (JP); OGAWA, Yoshihiko, Kadoma-shi, Osaka 571-0057 (JP)
(74) Representative: Grünecker Patent- und Rechtsanwälte PartG mbB
(86) International application number: PCT/JP2021/040726
(87) International publication number: WO 2022/195952

(57) **Abstract**

This terminal comprises a reception circuit and a control circuit. After receipt of first downlink control information for assigning the resource of an uplink shared channel, the reception circuit receives second downlink control information for assigning the resource of a downlink shared channel. The control circuit controls the transmission of the uplink shared channel on the basis of whether or not the resource of an uplink control channel that is to be transmitted in response to the receipt of the downlink shared channel temporally overlaps the resource of the uplink shared channel. This control includes at least one of controlling the number of bits of a signal that is to be transmitted in the resource of the uplink shared channel; inhibiting the resource of the uplink shared channel from being used; and controlling the HARQ process for the downlink shared channel.

## Description

### Technical Field

The present disclosure relates to a terminal, a base station, and a communication method.

### Background Art

In recent years, a dramatic growth of Internet of Things (IoT) has been expected with the expansion and diversification of radio services as a background. The usage of mobile communication is expanding to all fields such as automobiles, houses, home electric appliances, or industrial equipment in addition to information terminals such as smart phones. In order to support the diversification of services, a substantial improvement in the performance and function of mobile communication systems has been required for various requirements such as an increase in the number of connected devices or low latency in addition to an increase in system capacity. The 5th generation mobile communication systems (5G) has features such as enhanced mobile broadband (eMBB), massive machine type communication (mMTC), and ultra reliable and low latency communication (URLLC), and can flexibly provide radio communication in response to a wide variety of needs.

The 3rd Generation Partnership Project (3GPP) as an international standardizing body has been specifying New Radio (NR) as one of 5G radio interfaces.

### Citation List

### Non-Patent Literature

NPL 1
   3GPP TS38.104, "NR Base Station (BS) radio transmission and reception (Release 15)," December 2020.
NPL 2
   RP-202928, "New WID on NR coverage enhancements," China Telecom, December 2020.
NPL 3
   3GPP TS38.211, "NR Physical channels and modulation (Release 16)," December 2020.
NPL 4
   3GPP TS38.212, "NR Multiplexing and channel coding (Release 16)," December 2020.
NPL 5
   3GPP TS38.213, "NR Physical layer procedures for control (Release 16)," December 2020.
NPL 6
   3GPP TS38.214, "NR Physical layer procedures for data (Release 16)," December 2020.
NPL 7
   R1-2100457, "Discussion on enhancement for PUSCH repetition type A," vivo, January 25th - February 5th, 2021.

### Summary of Invention

### Technical Problem

However, there is scope for further study on improvement of the coverage performance in uplink.

One non-limiting and exemplary embodiment of the present disclosure facilitates providing a terminal, a base station, and a communication method each capable of improving or enhancing the coverage performance in uplink.

A terminal according to an exemplary embodiment of the present disclosure includes: reception circuitry, which, in operation, receives, after receiving first downlink control information for allocating a resource for an uplink shared channel, second downlink control information for allocating a resource for a downlink shared channel; and control circuitry, which, in operation, performs control of transmission of the uplink shared channel, based on whether a resource for an uplink control channel overlaps in time with the resource for the uplink shared channel, the uplink control channel being transmitted in response to reception of the downlink shared channel, in which the control of the transmission of the uplink shared channel includes at least one of controlling the number of bits of a signal that is transmitted with the resource for the uplink shared channel, configuring the resource for the uplink shared channel to be unavailable, and/or controlling an HARQ process for the downlink shared channel.

It should be noted that general or specific embodiments may be implemented as a system, a method, an integrated circuit, a computer program, a storage medium, or any selective combination thereof.

According to an exemplary embodiment of the present disclosure, it is possible to improve or enhance the coverage performance in uplink.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an example of Physical Uplink Shared Channel (PUSCH) repetition Type A (the number of repetitions is four);
FIG. 2 illustrates an example of PUSCH repetition Type A enhancement (the number of repetitions is four);
FIG. 3 is a diagram for describing a constraint on Uplink Control Information (UCI) on PUSCH in NR Rel. 15/16;
FIG. 4 illustrates an exemplary relation between the PUSCH repetition Type A enhancement and retransmission in downlink transmission;
FIG. 5 is a block diagram illustrating an exemplary configuration focused on part of a base station;
FIG. 6 is a block diagram illustrating an exemplary configuration focused on part of a terminal;
FIG. 7 is a block diagram illustrating an exemplary configuration of the base station;
FIG. 8 is a block diagram illustrating an exemplary configuration of the terminal;
FIG. 9 is a flowchart describing an exemplary operation according to Embodiment 1;
FIG. 10 illustrates the exemplary operation according to Embodiment 1;
FIG. 11 is a flowchart describing an exemplary operation according to Embodiment 2;
FIG. 12 illustrates the exemplary operation according to Embodiment 2;
FIG. 13 is a flowchart describing an exemplary operation according to Embodiment 3;
FIG. 14 illustrates the exemplary operation according to Embodiment 3;
FIG. 15 illustrates an exemplary operation according to Variation 2;
FIG. 16 illustrates another exemplary operation according to Variation 2;
FIG. 17 illustrates an example of classification according to Variation 3;
FIG. 18 illustrates an exemplary operation according to Complement 4;
FIG. 19 illustrates an exemplary operation according to Complement 5;
FIG. 20 illustrates an exemplary operation according to Complement 7;
FIG. 21 illustrates an exemplary architecture of a 3GPP NR system;
FIG. 22 schematically illustrates a functional split between Next Generation-Radio Access Network (NG-RAN) and 5th Generation Core (5GC);
FIG. 23 is a sequence diagram of a Radio Resource Control (RRC) connection setup/reconfiguration procedure;
FIG. 24 schematically illustrates usage scenarios of enhanced Mobile BroadBand (eMBB), massive Machine Type Communications (mMTC), and Ultra Reliable and Low Latency Communications (URLLC); and
FIG. 25 is a block diagram illustrating an exemplary 5G system architecture for a non-roaming scenario.

### Description of Embodiments

Hereinafter, embodiments of the present disclosure will be described in detail with reference to the accompanying drawings.

In NR, for example, in addition to a frequency band of 6 GHz or less, mainly within 700 MHz to 3.5 GHz band (e.g., may be referred to as Frequency Range 1 (FR1)), which has been used for cellular communication, a millimeter-wave band such as 28 GHz or 39 GHz band capable of ensuring a wide band (e.g., may be referred to as FR2) can be utilized (e.g., see Non-Patent Literature (hereinafter referred to as "NPL") 1). Further, for example, in FR1, a high frequency band is possibly used compared with the frequency band used in Long Term Evolution (LTE) or 3rd Generation mobile communication systems (3G) such as 3.5 GHz band.

The higher the frequency band is, the greater a radio wave propagation loss is, and thus, the received quality of radio waves is likely to deteriorate. Hence, in NR, for example, it is expected to ensure almost the same communication area (or coverage) as in the Radio Access Technology (RAT) such LTE or 3G, in other words, to ensure an appropriate communication quality when the high frequency band is used compared with LTE or 3G. In one example, in Release 17 (e.g., referred to as "Rel. 17"), a method of improving the coverage in NR has been studied (e.g., see NPL 2).

In NR, a terminal transmits and receives data in accordance with resource allocation indicated by a layer-1 control signal (Downlink Control Information (DCI)) on a downlink control channel (Physical Downlink Control Channel (PDCCH)) from a base station, for example (e.g., see NPLs 3 to 6).

The terminal, for example, feeds back a response signal (Acknowledgement/Negative Acknowledgement (ACK/NACK)) that indicates success or failure of decoding on a downlink data channel (Physical Downlink Shared Channel (PDSCH)), by using an uplink control channel (Physical Uplink Control Channel (PUCCH)) (e.g., see NPL 5).

The terminal can also, for example, use PUCCH to transmit, in addition to ACK/NACK, downlink channel-state information (Channel State Information (CSI)) to the base station. These ACK/NACK and CSI are also called, for example, uplink control information (UCI).

When transmitting ACK/NACK for PDSCH assigned by the DCI, for example, the terminal transmits PUCCH in accordance with resource allocation indicated by the DCI from the base station. Control information included in the DCI may include information on a PUCCH resource, that is, for example, information on the timing of how many slots later PUCCH is transmitted since the slot in which PDSCH has been received (K1 or PDSCH-to-HARQ_feedback timing indication). Incidentally, HARQ is an abbreviation for Hybrid Automatic Repeat reQuest.

In uplink, for example, the terminal transmits an uplink data channel (Physical Uplink Shared Channel (PUSCH)) in accordance with resource allocation (Grant) indicated by the DCI on PDCCH from the base station (e.g., see NPLs 3 to 6). Control information included in the DCI may include, for example, information on a time-domain resource with which PUSCH is transmitted.

For example, the information on the time-domain resource may be information on the timing of how many slots later PUSCH is transmitted since the slot in which PDCCH has been received (K2), or information on at least one of a PUSCH start symbol position in a slot and the number of symbols for transmitting PUSCH.

In uplink transmission in NR, PUSCH can be transmitted by using multiple slots (also referred to as Repetition), and in NR Rel. 15/16, two PUSCH repetition schemes are defined, for example (e.g., see NPL 6).

The first Repetition scheme is a slot-by-slot Repetition in which, for example, the same time resource allocation is applied over consecutive multiple slots. Hereafter, the first Repetition scheme is referred to as PUSCH repetition Type A. In PUSCH repetition Type A, a base station indicates, to a terminal, time resource allocation in a slot and the number of slots for repetition (hereinafter referred to as repetition slots), for example. Here, the number of repetition slots may be, for example, a value that is counted based on consecutive slots.

The second Repetition scheme is a method in which one or a plurality of PUSCHs can be repeatedly transmitted in one slot. Hereafter, the second Repetition scheme is referred to as PUSCH repetition Type B. In PUSCH repetition Type B, the base station may indicate, to the terminal, a time-domain resource and the number of repetitions for a first (initial) PUSCH transmission, for example. In time-domain resource allocation for the second and subsequent PUSCH transmissions, symbols may be assigned, which are consecutive to and in number identical to the previous PUSCH transmission, for example.

In PUSCH repetition Type A, the number of repetition slots to be indicated is a value counted based on consecutive slots, so that the number of slots for actually transmitting PUSCH may be less than the number of repetition slots that has been indicated.

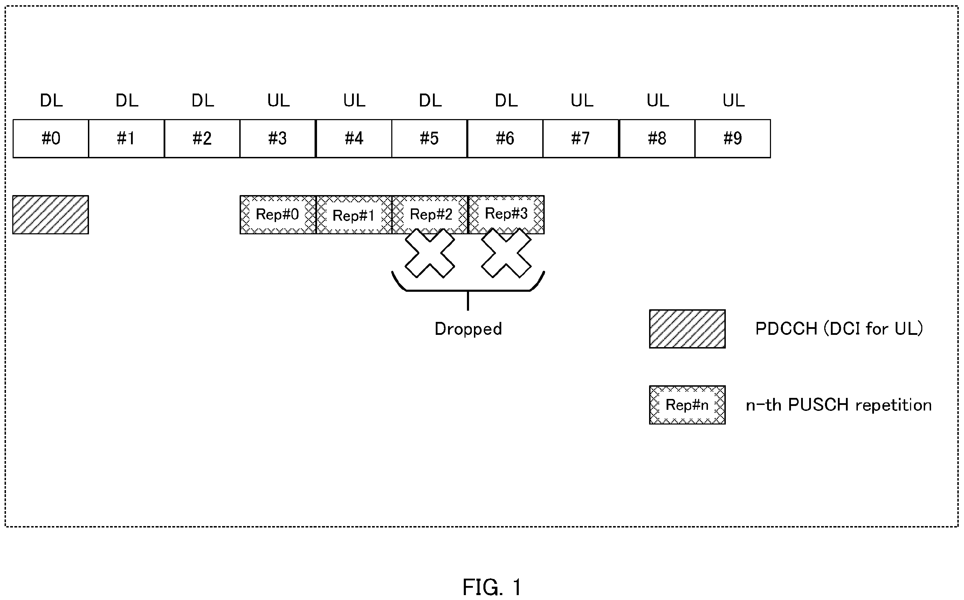

For example, as illustrated in FIG. 1, in Time Division Duplex (TDD), a case is assumed where slot #3 as a timing for transmitting PUSCH and the number of repetition slots, four, are indicated. In this case, when a downlink slot is included in the consecutive repetition slots (slots #3, #4, #5, and #6), no PUSCH is transmitted in the downlink slot (e.g., PUSCH transmission is dropped). Transmitting no PUSCH may deteriorate the PUSCH coverage performance in PUSCH repetition Type A.

Therefore, in NR Rel. 17, as a function extension of PUSCH repetition Type A, for example, it has been studied to make the number of repetition slots a value that is counted based on an uplink slot available for PUSCH transmission (e.g., see NPL 2).

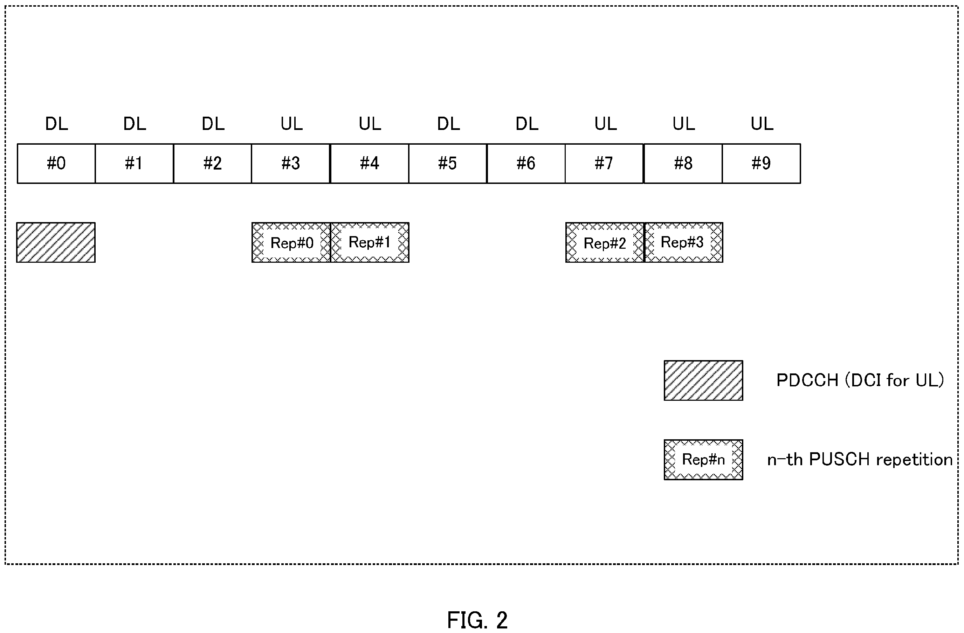

FIG. 2 illustrates an example in which slot #3 as a timing for transmitting PUSCH and the number of repetition slots, four, are indicated, and uplink slots available for the PUSCH transmission are slots #3, #4, #7, #8, and #9. Hereinafter, this Repetition scheme is referred to as PUSCH repetition Type A enhancement. PUSCH repetition Type A enhancement enables PUSCH transmission as many times as the number of repetition slots that has been indicated, which brings about expectations of improvement in the PUSCH coverage performance in PUSCH repetition Type A.

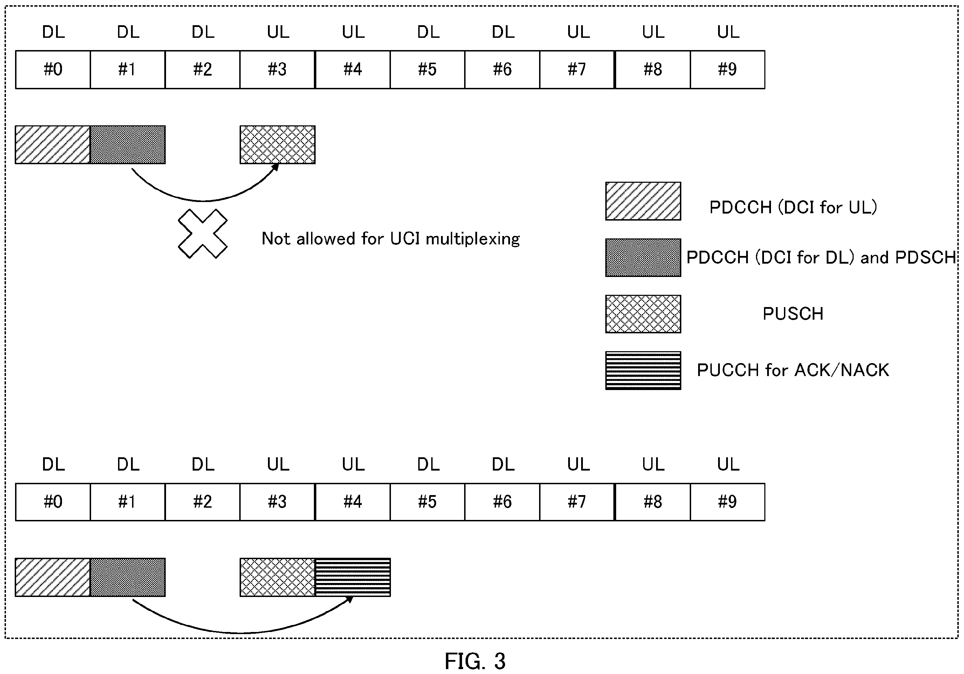

Further, in an uplink transmission of a terminal, transmission resources for PUCCH and PUSCH may overlap in time with each other. In this situation, in NR Rel. 15/16, the terminal can transmit an UCI and uplink data by multiplexing on PUSCH (e.g., see NPLs 4 and 5). In NR Rel. 15, however, there is a constraint of not allowing allocation of a PUCCH resource for transmitting ACK/NACK for PDSCH assigned by a second DCI after reception of a first DCI for assigning PUSCH, to a resource overlapping in time with the transmission of PUSCH assigned by the first DCI. For example, as illustrated in an upper part of FIG. 3, when the second DCI for assigning PDSCH is received in slot #1 after the first DCI for assigning PUSCH to slot #3 is received in slot #0, a resource for transmitting ACK/NACK for PDSCH is not allocated to a resource overlapping in time with the transmission of PUSCH (slot #3).

Thus, in NR Rel. 15/16, it is not supported that a LTE transmits ACK/NACK for PDSCH assigned by the second DCI after receiving the first DCI for assigning PUSCH, by multiplexing on PUSCH assigned by the first DCI.

Therefore, a PUCCH resource for transmitting ACK/NACK for PDSCH assigned by the second DCI after reception of the first DCI for assigning PUSCH is allocated to, for example, a resource (e.g., slot #4) not overlapping in time with the transmission of PUSCH assigned by the first DCI (e.g., slot #3), as illustrated in a lower part of FIG. 3.

On the other hand, in NR Rel. 17, introduction of PUSCH repetition Type A enhancement has been discussed, as mentioned above. In PUSCH repetition Type A enhancement, for example, the number of repetition slots is counted based on an uplink slot that is available for the PUSCH transmission. Consequently, for example, when the number of uplink slots is limited as in TDD, repeated transmissions of PUSCH may occupy the uplink slots.

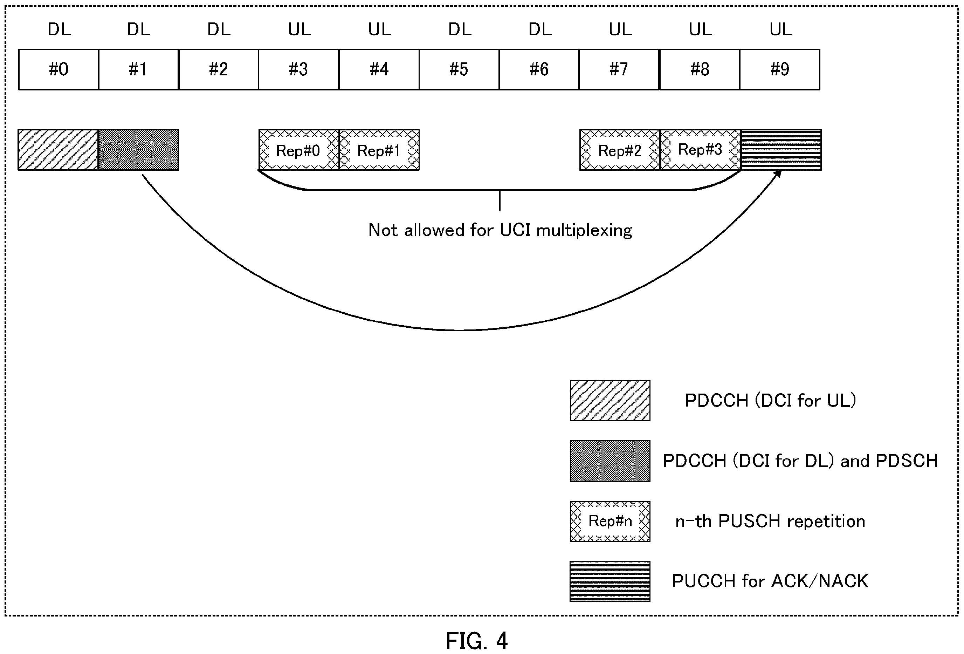

In this case, under the above-mentioned constraint of "not allowing allocation of a PUCCH resource for transmitting ACK/NACK for PDSCH assigned by the second DCI after reception of the first DCI for assigning PUSCH, to a resource overlapping in time with the transmission of PUSCH assigned by the first DCI," a LTE does not transmit ACK/NACK for PDSCH until the PUSCH repetition transmission is complete, as illustrated in FIG. 4, for example, which may result in a latency increase in downlink.

Further, while the control information included in the DCI for assigning PDSCH may include, for example, information on the timing of how many slots later PUCCH is transmitted since the slot in which PDSCH has been received (K1 or PDSCH-to-HARQ_feedback timing indication), the range of indicatable values of K1 is limited. Therefore, the above-mentioned constraint causes blocking of PDSCH assignment due to not allowing PUCCH assignment, which may reduce spectral efficiency in downlink.

For the purpose of improving the spectral efficiency and reducing the latency in the downlink transmission, it is desirable to remove the above-mentioned constraint of "not allowing allocation of a PUCCH resource for transmitting ACK/NACK for PDSCH assigned by the second DCI after reception of the first DCI for assigning PUSCH, to a resource overlapping in time with the transmission of PUSCH assigned by the first DCI."

For example, suppose, allowing allocation of a PUCCH resource for transmitting ACK/NACK for PDSCH assigned by the second DCI after reception of the first DCI for assigning PUSCH, to a resource overlapping in time with the transmission of PUSCH assigned by the first DCI.

By way of example, aforementioned NPL 7 describes transmission of ACK/NACK for PDSCH assigned by the second DCI, by puncturing a portion of the PUSCH resource assigned by the first DCI.

However, when the portion of the PUSCH resource is punctured to transmit ACK/NACK for PDSCH assigned by the second DCI, PUSCH coverage performance may deteriorate.

One non-limiting and exemplary embodiment of the present disclosure presents a terminal, a base station, and a communication method or a control method each capable of achieving improved spectral efficiency and reduced latency in a downlink transmission as well as reducing deterioration of the PUSCH coverage performance, when a terminal transmits PUSCH in Repetition.

For example, suppose, allowing allocation of a PUCCH resource for transmitting ACK/NACK for PDSCH assigned by the second DCI after reception of the first DCI for assigning PUSCH, to a resource overlapping in time with the transmission of PUSCH assigned by the first DCI. Then, for example, at least one of an ACK/NACK transmission method, the number of bits for transmitting ACK/NACK, and a resource for a PUSCH repetition transmission is controlled depending on whether a PUCCH resource for transmitting ACK/NACK for PDSCH assigned by the second DCI after reception of the first DCI overlaps in time with the transmission of PUSCH assigned by the first DCI.

In the following, some embodiments will be described.

### [Overview of Communication System]

A communication system according to each embodiment of the present disclosure includes, for example, at least one base station and at least one terminal.

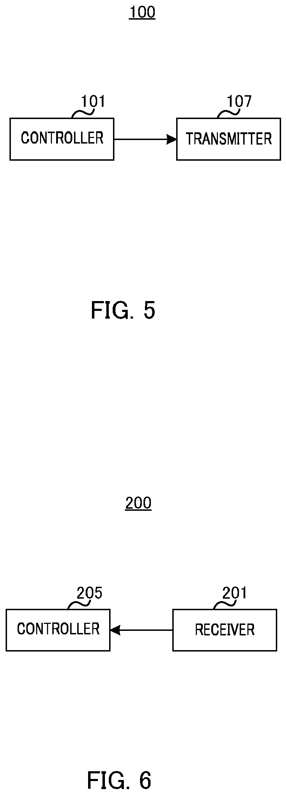

FIG. 5 is a block diagram illustrating an exemplary configuration of part of base station 100 according to an exemplary embodiment of the present disclosure, and FIG. 6 is a block diagram illustrating an exemplary configuration of part of terminal 200 according to an exemplary embodiment of the present disclosure.

In base station 100 illustrated in FIG. 5, controller 101 generates, for example, a first DCI for allocating a resource for an uplink shared channel (e.g., PUSCH) and a second DCI for allocating a resource for a downlink shared channel (e.g., PDSCH). Transmitter 107 transmits, for example, the first DCI and the second DCI to terminal 200.

In terminal 200 illustrated in FIG. 6, receiver 201 receives, from base station 100, the second DCI after receiving the first DCI, for example. Controller 205 performs control of transmission of PUSCH, based on whether a resource for an uplink control channel (e.g., PUCCH) to be transmitted in response to reception of PDSCH assigned by the second DCI overlaps in time with the resource for PUSCH assigned by the first DCI. The control of the transmission of PUSCH may include at least one of controlling the number of bits of a signal (e.g., ACK/NACK) to be transmitted with the resource for PUSCH, disabling the resource for PUSCH, and controlling an HARQ process for PDSCH.

### (Embodiment 1)

### [Configuration of Base Station]

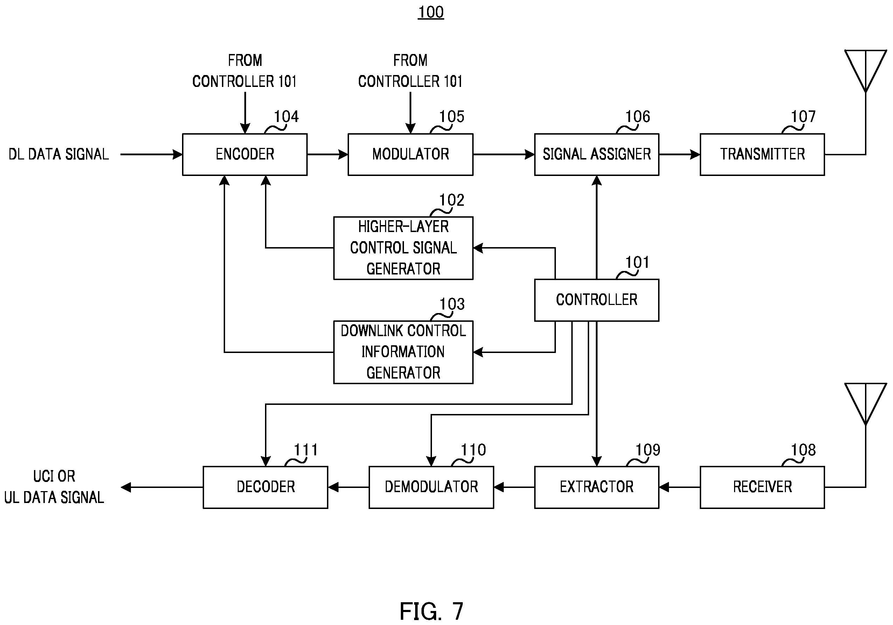

FIG. 7 is a block diagram illustrating an exemplary configuration of base station 100. The exemplary configuration of base station 100 illustrated in FIG. 7 may be common throughout the present disclosure including other embodiments and variations to be described later.

As illustrated in FIG. 7, base station 100 may include, for example, controller 101, higher-layer control signal generator 102, downlink control information generator 103, encoder 104, modulator 105, signal assigner 106, and transmitter 107. Base station 100 may further include, for example, receiver 108, extractor 109, demodulator 110, and decoder 111.

Controller 101, for example, determines at least one of information on a PDSCH reception, information on a PUSCH transmission, and information on a PUCCH transmission, which are for terminal 200, and outputs the determined information to higher-layer control signal generator 102. The information on the PDSCH reception and the information on the PUSCH transmission may include at least one of information on a Time Domain Resource Allocation (TDRA) table and information on the number of Repetitions. The information on the PUCCH transmission may include at least one of information on a PUCCH resource set and information on K1.

Controller 101 also determines, for example, a coding/modulation scheme and radio resource allocation for a downlink data signal or a higher-layer control signal and a downlink signal that is for transmitting downlink control information. The determined information may be outputted to encoder 104, modulator 105, and signal assigner 106, for example. The coding/modulation scheme and information on the radio resource allocation for the data signal or the higher-layer control signal may be outputted to downlink control information generator 103, for example.

Controller 101 also determines, for example, a PUCCH resource for terminal 200 to transmit PUCCH, and outputs the determined information to higher-layer control signal generator 102 or downlink control information generator 103. Controller 101, for example, outputs the determined information also to extractor 109, demodulator 110, and decoder 111.

Controller 101 also determines, for example, a coding/modulation scheme and radio resource allocation for terminal 200 to transmit an uplink data signal, and outputs the determined information to downlink control information generator 103, extractor 109, demodulator 110, and decoder 111.

Additionally, controller 101 may, for example, determine whether to transmit PUSCH in Repetition and whether a PUCCH resource for transmitting PUCCH and a radio resource for transmitting uplink data overlap in time with each other. When they overlap in time with each other, controller 101 identifies, for example, at least one of an ACK/NACK transmission method, the number of bits for transmitting ACK/NACK, and a resource for the PUSCH repetition transmission, as described below. The identified information may be outputted to extractor 109, demodulator 110, and decoder 111, for example.

Higher-layer control signal generator 102 generates, for example, a higher-layer control signal (e.g., bit sequence (or bit string)) by using the control information inputted from controller 101. The generated signal may be outputted to encoder 104, for example.

Downlink control information generator 103 generates, for example, a DCI (e.g., bit sequence) by using the control information inputted from controller 101 and outputs the generated DCI to encoder 104. Note that the control information may be transmitted to a plurality of terminals 200.

Encoder 104 encodes, for example, downlink data, the bit sequence obtained from higher-layer control signal generator 102, or the DCI inputted from downlink control information generator 103, and then outputs the encoded bit sequence to modulator 105.

Modulator 105 modulates, for example, the encoded bit sequence received from encoder 104 and outputs the modulated bit sequence to signal assigner 106.

Signal assigner 106 maps, to a radio resource indicated by controller 101, the downlink data signal or control signal inputted from modulator 105 as a symbol sequence, for example. Further, signal assigner 106 outputs the signal mapped to the radio resource to transmitter 107.

Transmitter 107 performs, for example, transmission-waveform generation processing such as orthogonal Frequency Division Multiplexing (OFDM) on the signal outputted from signal assigner 106. In the case of an OFDM transmission using a cyclic prefix (CP), transmitter 107 may add the CP to the signal resulting from Inverse Fast Fourier Transform (IFFT).

Further, transmitter 107 performs, for example, radio (RF) processing such as Digital-Analog (D/A) conversion and/or up-conversion on the signal outputted from signal assigner 106, and then outputs the resultant radio signal to terminal 200 via an antenna.

Receiver 108 performs, for example, RF processing such as down-conversion and/or Analog-Digital (A/D) conversion on an uplink signal received from terminal 200 via an antenna.

Further, in the case of the OFDM transmission, receiver 108 applies the FFT to a received signal so as to generate a frequency-domain signal, and then outputs the signal to extractor 109.

Extractor 109 extracts, from the received signal, a radio resource part with which PUSCH or PUCCH has been transmitted, based on the information received from controller 101, for example, and outputs the extracted signal for PUSCH or PUCCH to demodulator 110.

Demodulator 110, for example, demodulates PUSCH or PUCCH based on the information received from controller 101 and then outputs a demodulation result to decoder 111.

Decoder 111, for example, performs error correction decoding on PUSCH or PUCCH based on the information received from controller 101 and the demodulation result received from demodulator 110, and thereby obtains a reception bit sequence (e.g., UL data signal or UCI) after the decoding.

### [Configuration of Terminal]

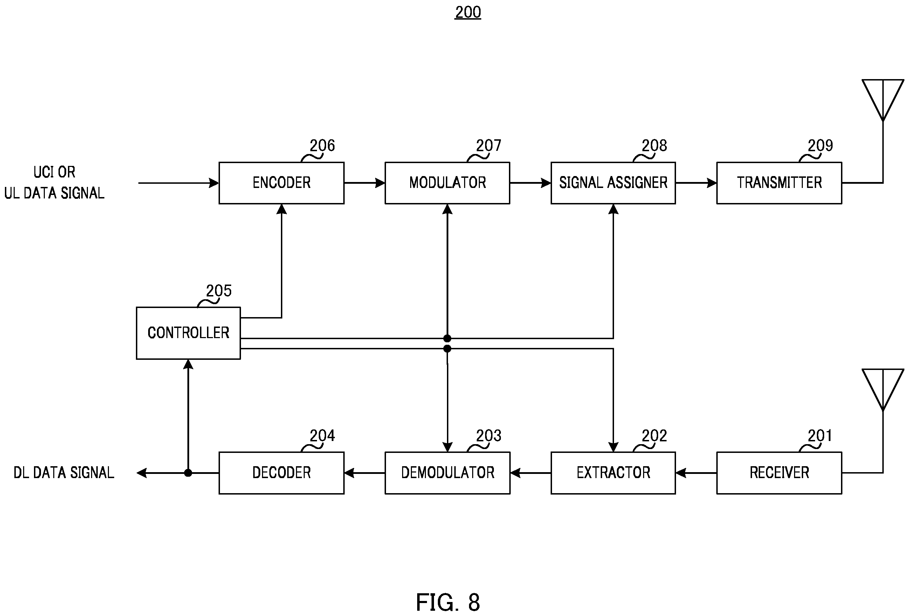

Next, an exemplary configuration of terminal 200 will be described with reference to FIG. 8. As illustrated in FIG. 8, terminal 200 includes receiver 201, extractor 202, demodulator 203, decoder 204, and controller 205. Terminal 200 may further include encoder 206, modulator 207, signal assigner 208, and transmitter 209.

Receiver 201 receives via an antenna, for example, a data signal or a downlink control signal transmitted from base station 100, performs the RF processing such as the down-conversion and/or the A/D conversion on the received radio signal, thereby generating a baseband signal.

Further, when receiving an OFDM signal, receiver 201 performs the FFT processing on the received signal to convert the received signal into that in the frequency domain.

Extractor 202, for example, extracts, from the received signal received from receiver 201, a radio resource part, which includes the downlink control signal, by using information on a radio resource for a control signal inputted from controller 205, and then outputs the extracted signal to demodulator 203. Further, extractor 202 extracts a radio resource part, which includes the data signal, by using information on a radio resource for the data signal inputted from controller 205, and then outputs the extracted signal to demodulator 203.

Demodulator 203, for example, based on information received from controller 205, demodulates PDCCH or PDSCH and outputs a demodulation result to decoder 204.

Decoder 204, for example, performs error correction decoding on PDCCH or PDSCH, using the information received from controller 205 and the demodulation result obtained by demodulator 203, thereby obtaining downlink reception data, higher-layer control information, or downlink control information. The obtained higher-layer control information and downlink control information may be outputted to controller 205, for example. Further, decoder 204 may generate an ACK/NACK signal, using the decoding result for the downlink reception data.

Controller 205, for example, identifies (or determines) a radio resource for a PDSCH reception, a PUSCH transmission, or a PUCCH transmission, based on radio resource allocation information that is obtained from the higher-layer control signal and the downlink control information. Additionally, controller 205, for example, outputs the determined information to signal assigner 208, extractor 202, and demodulator 203.

Further, controller 205 may, for example, determine whether a PUCCH resource for transmitting PUCCH and a radio resource for transmitting uplink data overlap in time with each other. When they overlap in time with each other, controller 205 may identify, for example, at least one of an ACK/NACK transmission method, the number of bits for transmitting ACK/NACK, and a resource for a PUSCH repetition transmission, as described below. The identified information may be outputted to encoder 206, modulator 207, and signal assigner 208, for example.

Encoder 206 encodes, for example, a UCI or an uplink data signal, based on the information inputted from controller 205, and then outputs the encoded bit sequence to modulator 207.

Modulator 207 modulates, for example, the encoded bit sequence received from encoder 206 to generate a modulated symbol sequence, thus outputting the modulated symbol sequence to signal assigner 208.

Signal assigner 208 maps, to a radio resource indicated by controller 205, the signal inputted from modulator 207, for example. Further, signal assigner 208 outputs the signal mapped to the radio resource to transmitter 209.

Transmitter 209, for example, performs transmission signal-waveform generation such as OFDM on the signal input from signal assigner 208. In addition, in the case of the OFDM transmission using the CP, for example, transmitter 209 may add the CP to the signal after the IFFT. Alternatively, when a single-carrier waveform is generated, a Discrete Fourier Transformer (DFT) may be provided at a rear stage of modulator 207 or a front stage of signal assigner 208.

Further, transmitter 209 performs, for example, the RF processing such as the D/A conversion and/or the up-conversion on the transmission signal, and then outputs the radio signal via an antenna.

### [Exemplary Operation of Terminal 200]

An exemplary operation of terminal 200 having the above configuration will be described.

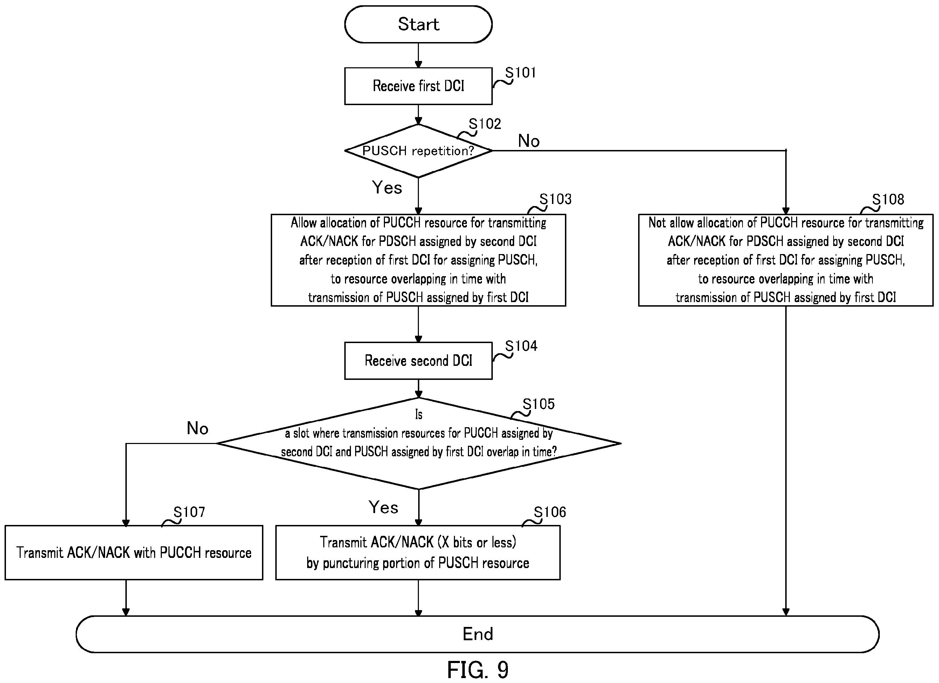

FIG. 9 is a flowchart describing an exemplary operation of terminal 200. As illustrated in FIG. 9, when receiving a first DCI for allocating PUSCH from base station 100, for example (S101), terminal 200 determines whether a PUSCH repetition transmission is applied (S102).

In a case where the PUSCH repetition transmission is not applied (S102: No), terminal 200 does not allow allocation of a PUCCH resource for transmitting ACK/NACK for PDSCH assigned by a second DCI after reception of a first DCI for assigning PUSCH, to a resource overlapping in time with the transmission of PUSCH assigned by the first DCI (S108). For example, terminal 200 may transmit PUCCH with a resource not overlapping in time with the transmission of PUSCH, by an equivalent operation supported in NR Rel. 15/16.

In a case where the PUSCH repetition transmission is applied (S102: Yes), terminal 200 allows allocation of the PUCCH resource for transmitting ACK/NACK for PDSCH assigned by the second DCI after reception of the first DCI for assigning PUSCH, to the resource overlapping in time with the transmission of PUSCH assigned by the first DCI (S103).

When receiving the second DCI for assigning PDSCH (S104), terminal 200 determines, for example, whether a transmission resource for PUCCH assigned by the second DCI and a transmission resource for PUSCH assigned by the first DCI overlap in time with each other (S105).

In a case where the resources for PUCCH and PUSCH overlap in time with each other (S105: Yes), terminal 200 may, for example, puncture a portion of the resource for PUSCH assigned by the first DCI and then transmit, with the punctured resource, ACK/NACK for PDSCH assigned by the second DCI (S106). In other words, terminal 200 may transmit ACK/NACK for PDSCH assigned by the second DCI, by using (or reallocating) the portion of the resource for PUSCH assigned by the first DCI, as a resource for PUCCH. Note that puncturing may be performed avoiding a resource to which a reference signal (e.g., demodulation reference signal (DMRS)) is mapped in PUSCH, for example.

Here, the number of bits of ACK/NACK (for PDSCH assigned by the second DCI) that can be transmitted by puncturing a portion of the resource for PUSCH assigned by the first DCI may be limited to, for example, a threshold (e.g., X bits) or less.

When the number of bits of ACK/NACK to be transmitted for PDSCH assigned by the second DCI exceeds X bits, terminal 200 may apply ACK/NACK bundling (e.g., compression of ACK/NACK bits) to decrease the number of ACK/NACK bits, which is actually transmitted, to X (bits) or less. For example, terminal 200 may puncture a portion of the PUSCH resource assigned by the first DCI, in accordance with the number of ACK/NACK bits that is decreased to X bits or less, thereby transmitting ACK/NACK. Herein, X is a positive integer greater than zero.

A value of X may be determined based on, for example, a required PUSCH coverage performance. The value of X may be, for example, a value predetermined by standards (e.g., X = two bits), a value statically configured by an RRC signaling, a value configured by a Medium Access Control-Control Element (MAC-CE) indication, a value dynamically indicated by the DCI, or a value determined implicitly, or may be determined by any combination thereof. A non-limiting example of an implicit determination of the value of X may include determination of the value of X based on the number of repetitions of PUSCH or determination based on other information or parameters configured for terminal 200.

When the transmission resource for PUCCH assigned by the second DCI and the transmission resource for PUSCH assigned by the first DCI do not overlap in time with each other (S105: No), terminal 200 may transmit, through PUCCH assigned by the second DCI, ACK/NACK for PDSCH assigned by the second DCI, for example (S107).

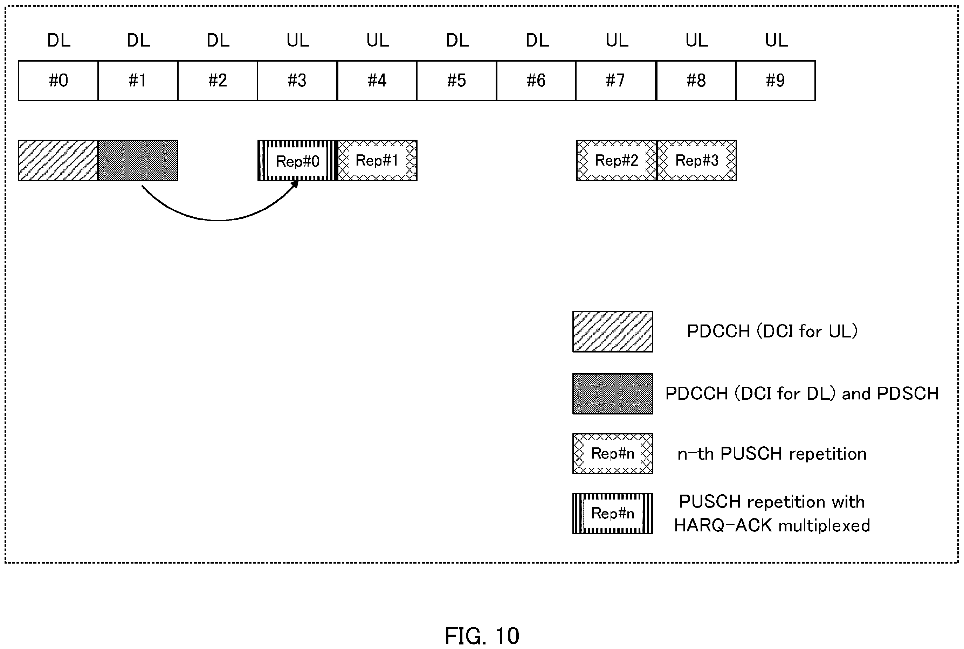

FIG. 10 illustrates an exemplary operation according to Embodiment 1. As illustrated in FIG. 10, the first DCI in slot #0 assigns slot #3 as a timing for transmitting PUSCH and PUSCH repetition Type A enhancement where the number of repetition slots is four. Terminal 200 repeatedly transmits PUSCH in slots #3, #4, #7, and #8. In the present disclosure, the term "slot" is an example of a time-resource unit and may be a unit referred to by another term.

Meanwhile, the second DCI in slot #1 assigns PDSCH and allocates a PUCCH resource for transmitting ACK/NACK for PDSCH to slot #3. In this case, in slot #3 where transmission resources for PUCCH and PUSCH overlap in time with each other, ACK/NACK for PDSCH assigned by the second DCI is transmitted by puncturing a portion of the PUSCH resource. Herein, the number of ACK/NACK bits to be transmitted is X bits or less.

As described above, according to Embodiment 1, when terminal 200 transmits PUSCH in Repetition, allocation is allowed of a PUCCH resource for transmitting ACK/NACK for PDSCH assigned by the second DCI after reception of the first DCI for assigning PUSCH, to a resource overlapping in time with the transmission of PUSCH assigned by the first DCI. Therefore, it can be achieved to improve the spectral efficiency and reduce the latency in the downlink transmission.

In addition, the number of bits of ACK/NACK that is for PDSCH assigned by the second DCI and is transmitted by puncturing a portion of a PUSCH resource assigned by the first DCI is limited to X bits or less, so that deterioration in the PUSCH coverage performance can be reduced by configuring the value of X appropriately.

### (Embodiment 2)

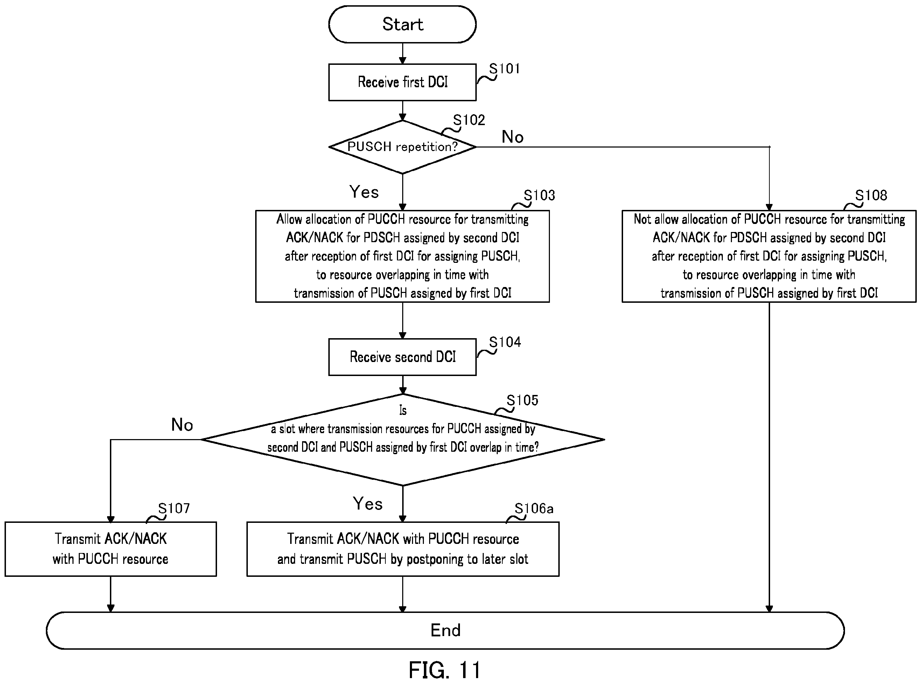

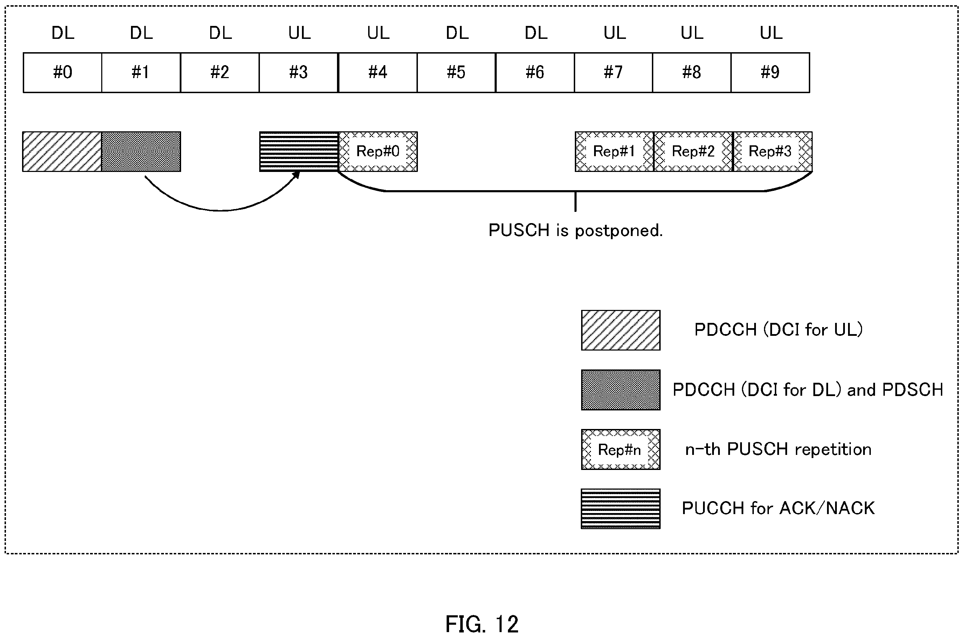

Next, Embodiment 2 will be described with reference to FIGS. 11 and 12. The configurations of base station 100 and terminal 200 according to Embodiment 2 may be the same as in Embodiment 1.

FIG. 11 is a flowchart describing an exemplary operation of terminal 200 according to Embodiment 2. In FIG. 11, processing of S101 to S105, S107, and S108 excluding S106a may be the same as the processing described in FIG. 9 of Embodiment 1.

In Embodiment 2, as with Embodiment 1, when the Repetition transmission of PUSCH is applied for terminal 200, it is allowed to allocate a PUCCH resource for transmitting ACK/NACK for PDSCH assigned by the second DCI after reception of the first DCI for assigning PUSCH, to a resource overlapping in time with the transmission of PUSCH assigned by the first DCI.

Additionally, in Embodiment 2, in a slot where the transmission resources for PUCCH and PUSCH overlap in time with each other, ACK/NACK for PDSCH assigned by the second DCI is treated as transmission with a high priority as compared with PUSCH assigned by the first DCI. For example, the slot where the transmission resources for PUCCH and PUSCH overlap in time with each other may be configured as a slot that is not available (unavailable slot) for the PUSCH transmission.

In this case, terminal 200 may transmit ACK/NACK with the PUCCH resource allocated by the second DCI and postpone, later in time, for example, the repeated transmission of PUSCH assigned by the first DCI (S106a).

FIG. 12 is a flowchart describing an exemplary operation according to Embodiment 2. The first DCI in slot #0 assigns slot #3 as a timing for transmitting PUSCH and PUSCH repetition Type A enhancement where the number of repetition slots is four. Meanwhile, the second DCI in slot #1 assigns PDSCH and allocates a PUCCH resource for transmitting ACK/NACK for PDSCH to slot #3.

In this case, in slot #3 where the transmission resources for PUCCH and PUSCH overlap in time with each other, ACK/NACK is treated as transmission with a high priority as compared to PUSCH, and thus, slot #3 is configured as a slot that is not available (unavailable slot) for the PUSCH transmission. Accordingly, in slot #3, terminal 200 transmits, with a PUCCH resource, ACK/NACK with the high priority as compared to PUSCH.

Incidentally, in PUSCH repetition Type A enhancement, the number of repetition slots is counted based on an uplink slot available for the PUSCH transmission. Therefore, terminal 200 repeatedly transmits PUSCH in slots #4, #7, #8, and #9, which are uplink slots available for the PUSCH transmission.

As described above, according to Embodiment 2, when terminal 200 transmits PUSCH in Repetition, allocation is allowed of a PUCCH resource for transmitting ACK/NACK for PDSCH assigned by the second DCI after reception of the first DCI for assigning PUSCH, to a resource overlapping in time with the transmission of PUSCH assigned by the first DCI. Therefore, it can be achieved to improve the spectral efficiency and reduce the latency in the downlink transmission.

Further, in Embodiment 2, since a slot where the transmission resources for PUCCH and PUSCH overlap in time with each other is configured as a slot that is not available (unavailable slot) for the PUSCH transmission, terminal 200 can perform the PUSCH repetition transmission in a slot located later in time (i.e., postpone). Hence, terminal 200 can transmit PUSCH as many times as the indicated number of repetition slots without any impact such as puncturing of the PUSCH resource by ACK/NACK, thus avoiding or suppressing deterioration in the PUSCH coverage performance.

### (Embodiment3)

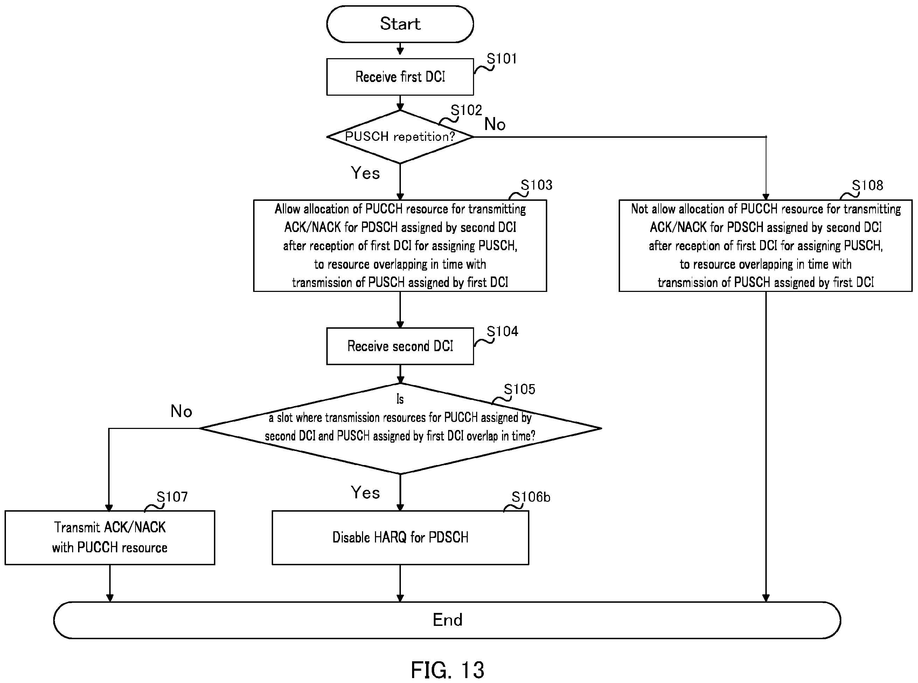

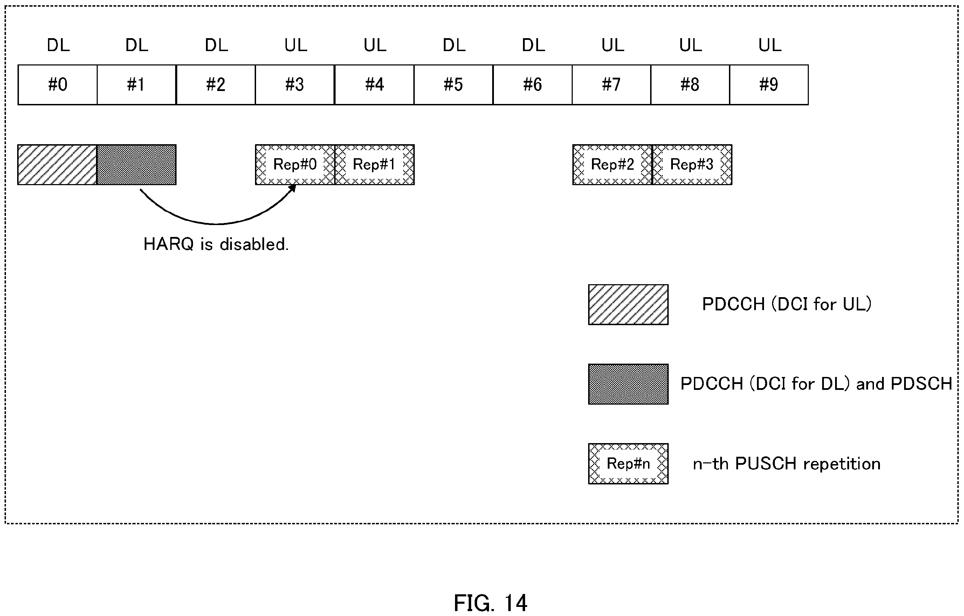

Next, Embodiment 3 will be described with reference to FIGS. 13 and 14. The configurations of base station 100 and terminal 200 according to Embodiment 3 may be the same as in Embodiment 1.

FIG. 13 is a flowchart describing an exemplary operation of terminal 200 according to Embodiment 3. In FIG. 13, processing of S101 to S105, S107, and S108 excluding S106b may be the same as the processing described in FIG. 9 of Embodiment 1.

In Embodiment 3, as with Embodiments 1 and 2, when the Repetition transmission of PUSCH is applied for terminal 200, it is allowed to allocate a PUCCH resource for transmitting ACK/NACK for PDSCH assigned by the second DCI after reception of the first DCI for assigning PUSCH, to a resource overlapping in time with the transmission of PUSCH assigned by the first DCI.

Further, in Embodiment 3, when a PUCCH resource for transmitting ACK/NACK for PDSCH assigned by the second DCI overlaps in time with the transmission of PUSCH assigned by the first DCI, an HARQ process for PDSCH assigned by the second DCI may be configured to be Disabled (S106b).

In other words, when the PUCCH resource for transmitting ACK/NACK for PDSCH assigned by the second DCI overlaps in time with the transmission of PUSCH assigned by the first DCI, terminal 200 transmits no ACK/NACK for PDSCH assigned by the second DCI.

FIG. 14 illustrates an exemplary operation according to Embodiment 4. The first DCI in slot #0 assigns slot #3 as a timing for transmitting PUSCH and PUSCH repetition Type A enhancement where the number of repetition slots is four. Terminal 200 repeatedly transmits PUSCH in slots #3, #4, #7, and #8.

Meanwhile, the second DCI in slot #1 assigns PDSCH and allocates a PUCCH resource for transmitting ACK/NACK for PDSCH to slot #3. In this case, the HARQ process for PDSCH assigned by the second DCI is disabled in slot #1, and terminal 200 transmits no ACK/NACK in slot #3.

As described above, according to Embodiment 3, as with Embodiments 1 and 2, when terminal 200 performs the Repetition transmission of PUSCH, allocation is allowed of a PUCCH resource for transmitting ACK/NACK for PDSCH assigned by the second DCI after reception of the first DCI for assigning PUSCH, to a resource overlapping in time with the transmission of PUSCH assigned by the first DCI. As a result, it can be achieved to improve the spectral efficiency and reduce the latency in the downlink transmission.

Further, according to Embodiment 3, when a PUCCH resource for transmitting ACK/NACK for PDSCH assigned by the second DCI overlaps in time with the transmission of PUSCH assigned by the first DCI, an HARQ process for PDSCH assigned by the second DCI is configured to be Disabled. Therefore, terminal 200 can transmit PUSCH as many times as the indicated number of repetition slots without impact of puncturing of the PUSCH resource by ACK/NACK. As a result, it is possible to avoid or suppress deterioration in the PUSCH coverage performance.

Further, from the viewpoint of base station 100, for example, PDSCH can be assigned (i.e., scheduled) without waiting for reception of an HARQ-ACK feedback from terminal 200, so that the degree of flexibility of scheduling can be improved.

In this case, disabling the HARQ process may cause deterioration in retransmission efficiency in the downlink transmission. However, for example, the deterioration in the retransmission efficiency can be reduced by applying processing of configuring the reliability of PDSCH appropriately, such as transmission of PDSCH for which the HARQ process is disabled with an increased reliability for the initial transmission (e.g., with adjustment of Modulation and Coding Scheme (MCS) and/or allocation-resource amount).

### (Variation 1)

In the present variation, when the Repetition transmission of PUSCH is applied for terminal 200, it is allowed to allocate a PUCCH resource for transmitting ACK/NACK for PDSCH assigned by the second DCI after reception of the first DCI for assigning PUSCH, to a resource overlapping in time with the transmission of PUSCH assigned by the first DCI.

Further, in the present variation, when a PUCCH resource for transmitting ACK/NACK for PDSCH assigned by the second DCI overlaps in time with the transmission of PUSCH assigned by the first DCI, ACK skipping may be applied to an HARQ process for PDSCH assigned by the second DCI.

When the ACK skipping is applied to the HARQ process, terminal 200 transmits no ACK/NACK for PDSCH as long as a decoding result for PDSCH is ACK. Probability that the decoding result for PDSCH is ACK tends to be higher than probability that it is NACK; thus, skipping of an ACK transmission can reduce overhead of PUCCH and also reduce processing load of terminal 200, for example.

The present variation may be understood to be similar to application of Embodiment 3 when a decoding result for PDSCH assigned by the second DCI is ACK. On the other hand, when the decoding result for PDSCH assigned by the second DCI is NACK, Embodiment 1 or Embodiment 2 may be applied.

According to the present variation, the puncturing of the PUSCH resource or the postponement (postpone) of the PUSCH transmission is applied when a decoding result for PDSCH assigned by the second DCI is NACK, thus reducing the impact on the PUSCH repetition.

### (Variation 2)

In Embodiment 1, 2, and 3 described above, when the Repetition transmission of PUSCH is applied for terminal 200, it has been allowed to allocate a PUCCH resource for transmitting ACK/NACK for PDSCH assigned by the second DCI after reception of the first DCI for assigning PUSCH, to a resource overlapping in time with the transmission of PUSCH assigned by the first DCI.

Here, the slot where transmission resources for PUCCH and PUSCH overlap in time with each other may be any slot for the PUSCH repetition assigned by the first DCI. For example, the slot where the transmission resources for PUCCH and PUSCH overlap in time with each other may be a start slot in the PUSCH repetition as illustrated in FIGS. 10, 12, and 14 or may be a different slot from the start slot.

Incidentally, an embodiment to be applied may be varied among Embodiments 1, 2, and 3, depending on which slot for the PUSCH repetition overlaps (or collides) with a PUCCH resource for transmitting ACK/NACK for PDSCH assigned by the first DCI.

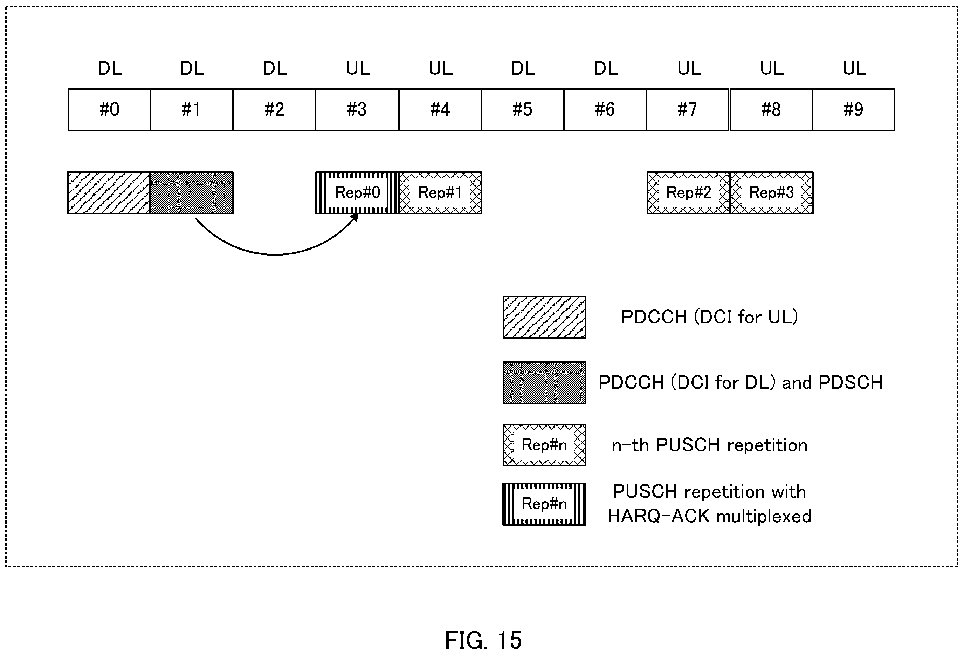

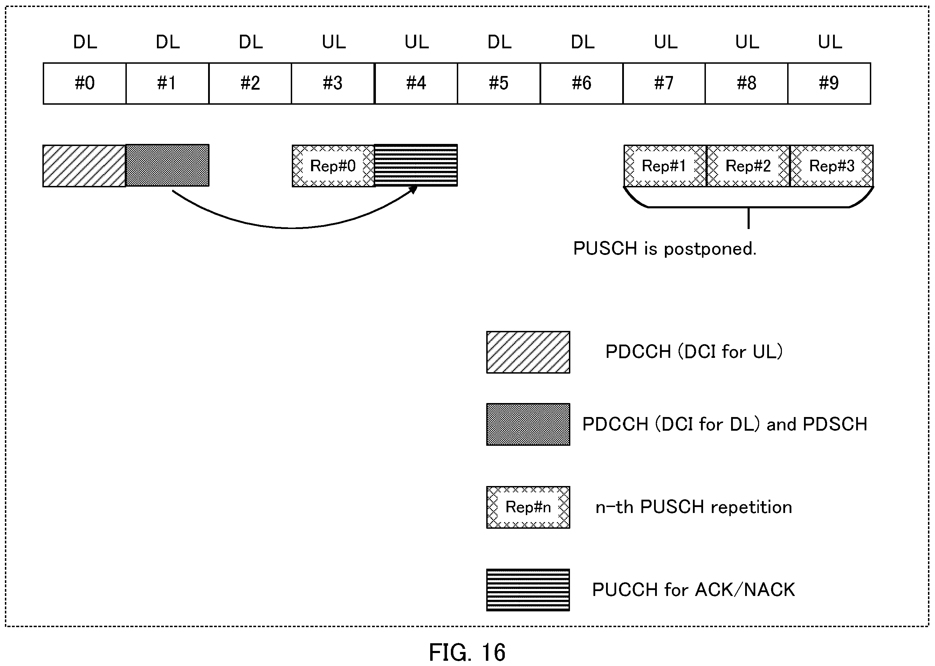

As a non-limiting example, Embodiment 1 may be applied when a PUCCH resource for transmitting ACK/NACK collides with a start slot (Rep #0) in the PUSCH repetition as illustrated in FIG. 15, whereas Embodiment 2 may be applied when the PUCCH resource collides with a slot different from the start slot (e.g., Rep #1) in the PUSCH repetition as illustrated in FIG. 16.

Moreover, as a non-limiting example, Embodiment 3 may be applied when a PUCCH resource for transmitting ACK/NACK collides with a start slot in a PUSCH repetition, whereas Embodiment 2 may be applied when the PUCCH resource for transmitting ACK/NACK collides with a slot different from the start slot in the PUSCH repetition.

According to the present variation, for example, appropriate operations or processes corresponding to the terminal capability can be applied for terminal 200, based on a time required for a terminal operation (or process) such as the puncturing, the postponement, or the HARQ disable.

### (Variation 3)

In NR Rel. 16, a priority can be configured for an uplink transmission such as PUSCH or ACK/NACK. For example, in NR Rel. 16, the number of priority levels is two, and thus, an uplink transmission for which priority index 0 is configured has a low priority, whereas an uplink transmission for which priority index 1 is configured has a high priority.

In the present variation, among Embodiments 1, 2, and 3, an embodiment to be applied may be varied depending on a priority of ACK/NACK or a priority of PUSCH, or both of them.

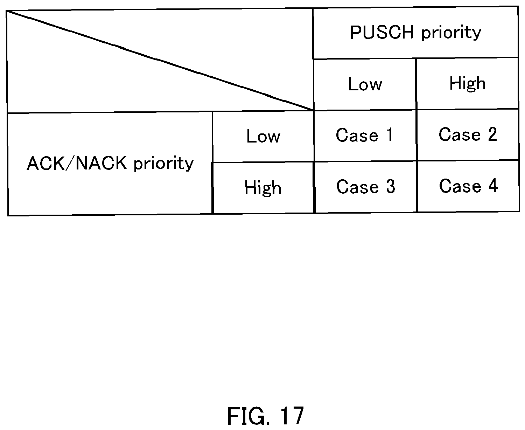

FIG. 17 illustrates an example of classification in accordance with the priority of ACK/NACK and the priority of PUSCH. For example, Embodiment 1 may be applied to Case 1 or Case 4 (ACK/NACK priority and PUSCH priority is the same), Embodiment 3 may be applied to Case 2 (PUSCH priority is higher than ACK/NACK priority), and Embodiment 2 may be applied to Case 3 (ACK/NACK priority is higher than PUSCH priority).

A combination of embodiments applied to the respective Cases is not limited to the above. For example, Embodiment 2 or 3 may be applied to Case 1 or Case 4.

According to the present variation, when ACK/NACK has a high priority, Embodiment 2 is applied to transmit ACK/NACK with priority and to postpone PUSCH, thereby making it possible to compensate for the PUSCH coverage. Meanwhile, when PUSCH has a high priority, Embodiment 3 is applied to transmit PUSCH with the resource allocated by the DCI, thereby making it possible to compensate for the coverage and the latency. In the manner described above, an appropriate uplink transmission can be achieved based on the priority of ACK/NACK or PUSCH.

### (Other Variations)

In the present disclosure, when the Repetition transmission of PUSCH is applied for terminal 200, it has been allowed to allocate a PUCCH resource for transmitting ACK/NACK for PDSCH assigned by the second DCI after reception of the first DCI for assigning PUSCH, to a resource overlapping in time with the transmission of PUSCH assigned by the first DCI, and thus, any of the above-mentioned embodiments and variations has been applied.

Here, for example, the above-mentioned embodiments or variations may be applied when the number of repetitions of PUSCH is greater than a threshold. Besides, an embodiment to be applied may be varied depending on the number of repetitions of PUSCH.

Moreover, an embodiment or variation to be applied may be varied depending on the number of ACK/NACK bits. Further, an embodiment or variation to be applied may be varied depending on whether the number of ACK/NACK bits is equal to or less than a threshold (e.g., X bits mentioned above) or whether the number of ACK/NACK bits can be compressed to the threshold or less.

The number of ACK/NACK bits may be, for example, the number of bits of ACK/NACK for PDSCH assigned by the second DCI, or the total number of bits of ACK/NACK for PDSCH assigned by the second DCI and ACK/NACK for PDSCH assigned by a DCI prior to the reception of the first DCI.

In the former example, it is unnecessary to take into account the number of bits of ACK/NACK for PDSCH assigned by a DCI that has been received earlier than the second DCI, thus suppressing a possible constraint on the assignment of ACK/NACK to a PUCCH resource. In other words, it is possible to improve a degree of flexibility of the ACK/NACK assignment to the PUCCH resource.

The latter example is useful in such a case where ACK/NACK for PDSCH assigned by the plurality of DCIs is transmitted through PUCCH by multiplexing with a UCI, so that, for example, puncturing of a PUSCH resource can be reduced, thereby avoiding or suppressing deterioration in the PUSCH coverage performance.

Further, in Embodiment 1, the number of ACK/NACK bits may be the number of bits before the ACK/NACK bundling or may be the number of bits after the ACK/NACK bundling.

Hereinafter, descriptions will be given of complements to the present disclosure that includes the above-described embodiments and variations.

### (Complement 1)

In PUSCH repetition Type A enhancement, the number of repetition slots is counted based on an uplink slot that is available for the PUSCH transmission, and any of the belowdescribed methods may be applied to determination of the uplink slot available for the PUSCH transmission.

### <Method 1>

The determination of an uplink slot available for the PUSCH transmission may depend on the RRC signaling. For example, the RRC signaling may include a TDD uplink/downlink slot format indication (e.g., semi-static slot format indicator (SFI)) and the like.

### <Method2>

The determination of an uplink slot available for the PUSCH transmission may depend on, for example, the RRC signaling and indication by a DCI for assigning a PUSCH repetition. For example, the RRC signaling may include the TDD uplink/downlink slot format indication (e.g., semi-static SFI) and the like. The DCI for assigning the PUSCH repetition may either directly (or explicitly) indicate a slot that is not available (unavailable slot) for the PUSCH transmission or indicate whether the unavailable uplink slot/symbol (invalid UL slot/symbol) that has been indicated by the RRC signaling is disabled or enabled.

### <Method 3>

The determination of an uplink slot available for the PUSCH transmission may depend on, for example, the RRC signaling, indication by the DCI for assigning the PUSCH repetition or by a dynamic SFI. For example, the RRC signaling may include the TDD uplink/downlink slot format indication (e.g., semi-static SFI) and the like. The DCI for assigning the PUSCH repetition may either directly (or explicitly) indicate a slot that is not available (unavailable slot) for the PUSCH transmission or indicate whether the unavailable uplink slot/symbol (invalid UL slot/symbol) that has been indicated by the RRC signaling is disabled or enabled. The dynamic SFI may include, for example, the TDD uplink/downlink slot format indication (dynamic SFI) indicated by Group-common PDCCH.

A relation between the determination methods of uplink slots available for the PUSCH transmission and the embodiments is described as follows, for example.

Embodiment 1 may be applied to any of Method 1, Method 2, and Method 3. Embodiment 2 is preferably applied in combination with Method 3. The reason is that, for example, the second DCI after the reception of the first DCI for assigning PUSCH can be processed as indication similar to the Dynamic SFI in Method 3. However, Embodiment 2 may be applied to other methods. Embodiment 3 may be applied to any of Method 1, Method 2, and Method 3.

### (Complement 2)

In the above-mentioned embodiments or variations, the PUSCH repetition has been described with application to PUSCH repetition Type A enhancement, for example, but a PUSCH repetition method is not limited to PUSCH repetition Type A enhancement. For example, the above-mentioned embodiments or variations may be applied to PUSCH repetition Type B.

Alternatively, the above-mentioned embodiments or variations may be applied only to a particular PUSCH repetition (e.g., PUSCH repetition Type A enhancement). Additionally, an embodiment or variation to be applied may be varied depending on the PUSCH repetition method.

### (Complement 3)

In the above-mentioned embodiments or variations, a description has been given of an application example to the PUCCH transmission in units of slots, but the transmission unit of PUCCH is not limited to slots. For example, the transmission unit of PUCCH may be subslots introduced in NR Rel. 16. In the PUCCH transmission in units of subslots, the number of symbols included in each subslot is fewer than that in a slot. By way of example, when the number of symbols included in a slot is 14 (or 12), the number of symbols included in a subslot may be 2 or 7 (or 6).

Further, depending on whether the PUCCH transmission unit is slots or subslots, application of the embodiments or variations may be controlled (e.g., enabled or disabled). Incidentally, depending on whether the PUCCH transmission unit is slots or subslots, an embodiment or variation to be applied may be varied.

### (Complement 4)

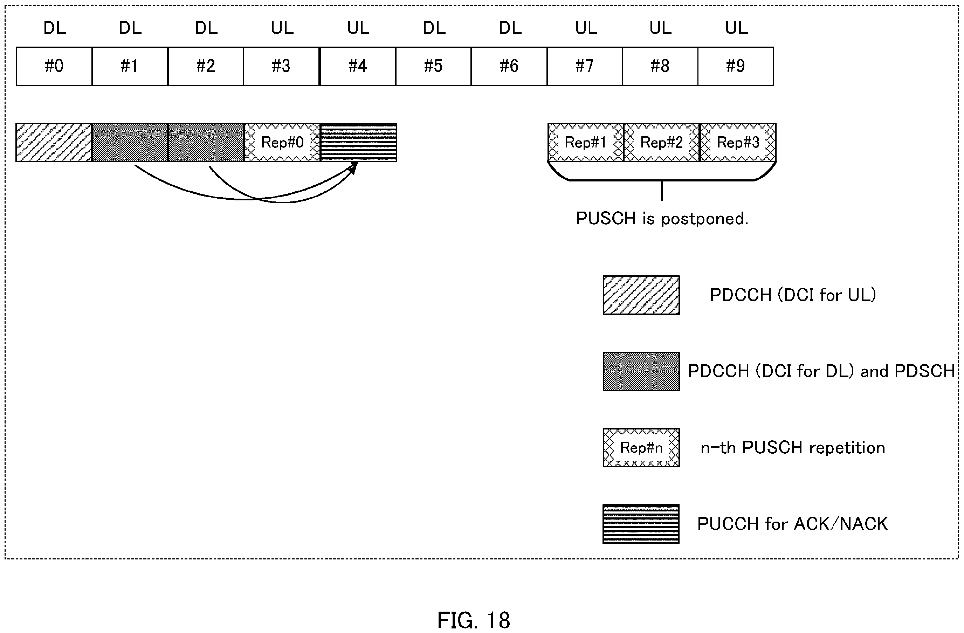

In the above-mentioned embodiments or variations, a case has been described where the number of the second DCIs after reception of the first DCI for assigning PUSCH is one. For example, as illustrated in FIG. 18, terminal 200 may receive a plurality of DCIs for assigning PUCCH to a resource overlapping in time with the transmission of PUSCH assigned by the first DCI. In this situation, for example, terminal 200 may replace (or read) the last received DCI of the plurality of DCIs with (as) the second DCI and then apply the above-mentioned embodiments or variations.

### (Complement 5)

In the above-mentioned embodiments or variations, PUCCH for transmitting ACK/NACK has been described with an example of transmission in a single slot, but PUCCH may be transmitted using a plurality of slots. For example, Repetition may also be applied to PUCCH.

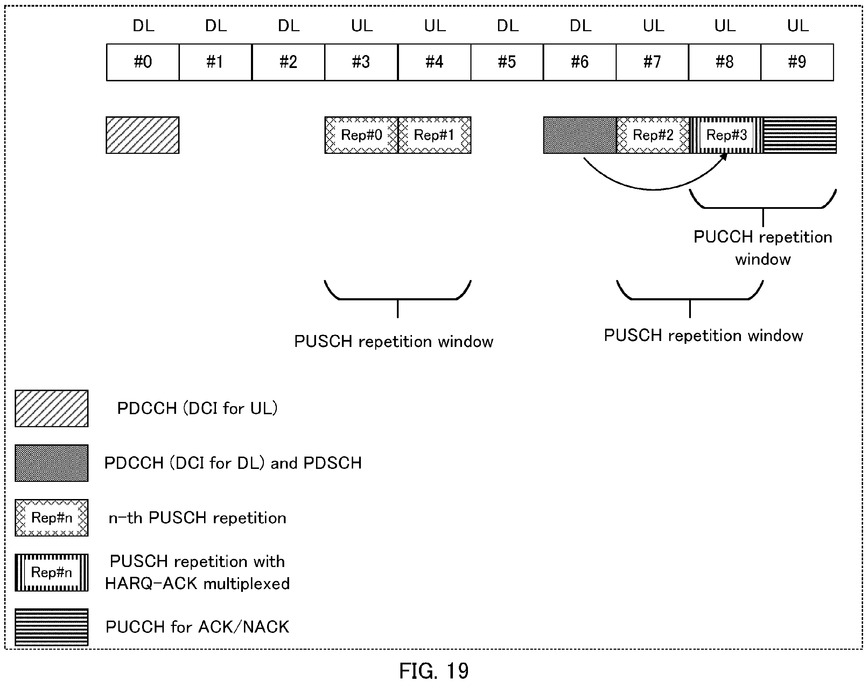

In this case, in Embodiment 1, for example, some of slots for the PUCCH repetition may collide with PUSCH. In a slot where a PUCCH resource and a PUSCH resource collide with each other (e.g., slot #8 illustrated in FIG. 19), terminal 200 may transmit ACK/NACK by puncturing a portion of the PUSCH resource, as with Embodiment 1. On the other hand, in a slot where the PUCCH resource and the PUSCH resource do not collide with each other (e.g., slot #9 illustrated in FIG. 19), terminal 200 may transmit ACK/NACK by using PUCCH.

The number of ACK/NACK bits to be transmitted may be, for example, the same between slots for the PUCCH repetition or may vary between the slots for the PUCCH repetition. A non-limiting example of the former includes application of the limitation with X bits (or application of ACK/NACK bundling) of Embodiment 1 regardless of whether the PUCCH resource and the PUSCH resource collide with each other. A non-limiting example of the latter includes application of the limitation with X bits (or application of ACK/NACK bundling) as with Embodiment 1 in a case where the PUCCH resource and the PUSCH resource collide with each other, while not applying the limitation with X bits (or not applying ACK/NACK bundling) to a slot where the PUCCH resource and the PUSCH resource do not collide with each other.

### (Complement 6)

In the above-mentioned embodiments or variations, the transmission of ACK/NACK has been described as an example, but the present disclosure may be applied to other UCIs, without limitation to ACK/NACK. For example, in NR Rel. 17, it has been studied to trigger a PUCCH transmission of an Aperiodic CSI by a DCI for assigning a downlink PDSCH. The UCI transmitted using PUCCH assigned by the second DCI may be replaced with the Aperiodic CSI from ACK/NACK.

### (Complement 7)

In the present disclosure, when the Repetition transmission of PUSCH is applied for terminal 200, it has been allowed to allocate a PUCCH resource for transmitting ACK/NACK for PDSCH assigned by the second DCI after reception of the first DCI for assigning PUSCH, to a resource overlapping in time with the transmission of PUSCH assigned by the first DCI.

Meanwhile, when the Repetition transmission of PUSCH is applied for terminal 200, it may not be allowed, as in NR Rel. 15/16, to allocate a PUCCH resource for transmitting ACK/NACK for PDSCH assigned by the second DCI after reception of the first DCI for assigning PUSCH, to a resource overlapping in time with the transmission of PUSCH assigned by the first DCI. Further, as noted above, the aforementioned embodiments or variations may not be applied depending on conditions.

In this situation, terminal 200 transmits ACK/NACK for PDSCH in an uplink slot after completion of the PUSCH repetition transmission, for example. Control information included in the DCI for assigning PDSCH may include information on the timing of how many slots later PUCCH is transmitted since the slot in which PDSCH has been received (K1 or PDSCH-to-HARQ_feedback timing indication).

Here, the information on the timing that can be indicated (or instructed) by the control information to terminal 200 (e.g., range of timing) is limited, and thus, when the PUSCH repetition is applied for terminal 200, extension of the range of the indicatable timing has been discussed.

For example, when the Repetition transmission of PUSCH is applied for terminal 200 while it is not allowed to allocate a PUCCH resource for transmitting ACK/NACK for PDSCH assigned by the second DCI after reception of the first DCI for assigning PUSCH, to a resource overlapping in time with the transmission of PUSCH assigned by the first DCI, the determination (calculation) of K1 need not include a slot in which the PUSCH repetition is transmitted.

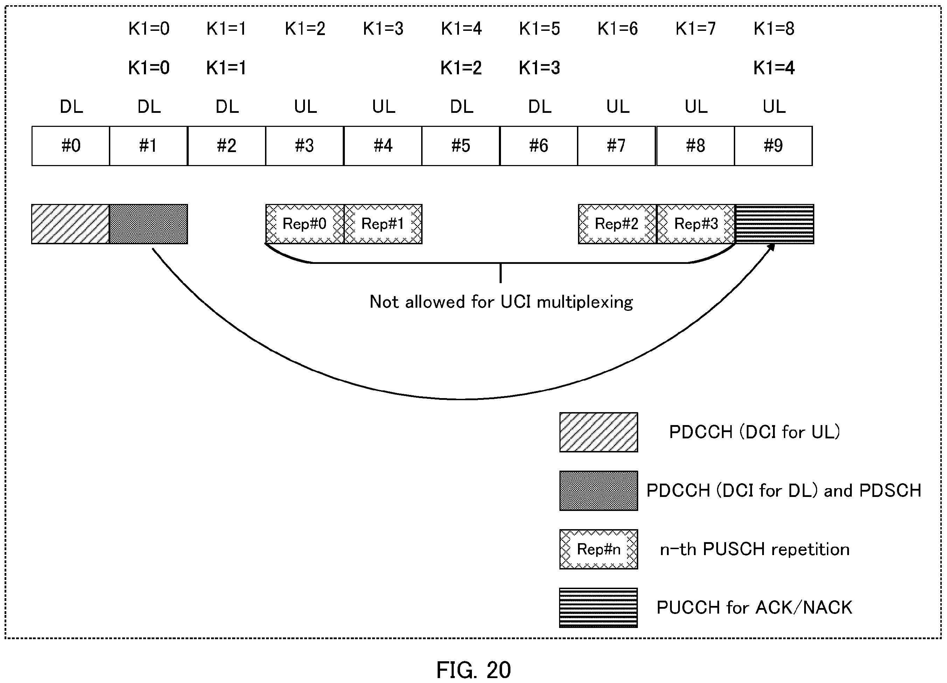

For example, as illustrated in FIG. 20, when the first DCI in slot #0 assigns slot #3 as a timing for transmitting PUSCH and PUSCH repetition Type A enhancement where the number of repetition slots is four, terminal 200 repeatedly transmits PUSCH in slots #3, #4, #7, and #8. FIG. 20 also illustrates an example in which the second DCI in slot #1 assigns PDSCH and allocates a PUCCH resource for transmitting ACK/NACK for PDSCH to slot #9.

In this situation, in the determination method of K1 based on the slot unit, the timing of slot #9 when terminal 200 transmits PUCCH can be indicated by K1 = 8, but the timing of slot #9 can be indicated by K1 = 4 as long as the slot for transmitting the PUSCH repetition is not used to determine K1. Accordingly, it is possible to extend the range of PUCCH transmission timing indicatable by K1, and thus, for example, the occurrence of PDSCH assignment blocking can be reduced, thereby avoiding or suppressing possible reduction in the spectral efficiency in downlink.

Note that the above-described determination method of K1 may be applied depending on a PUSCH repetition method or may be applied depending on whether the PUCCH transmission unit is slots or subslots or in accordance with a priority of ACK/NACK. In addition, the above-described determination method of K1 may be applied in combination with the aforementioned embodiments or variations.

### (Complement 8)

Information indicating whether terminal 200 supports the functions, operations, or processes that have been described in the above-mentioned embodiments, variations, and complements may be transmitted (or indicated) from terminal 200 to base station 100, as capability information or a capability parameter for terminal 200, for example.

The capacity information may include information elements (IEs) that individually indicate whether terminal 200 supports at least one of the functions, operations, or processes that have been described in the above-mentioned embodiments, variations, and complements. Alternatively, the capability information may include information elements that indicate whether terminal 200 supports a combination of any two or more of the functions, operations, or processes that have been described in the above-mentioned embodiments, variations, and complements.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. By way of example, base station 100 may control, based on the capability information received from terminal 200, allocation (i.e., scheduling) of at least one of a downlink resource such as PDCCH or PDSCH and an uplink resource such as PUCCH or PUSCH.

Note that in a case where terminal 200 does not entirely support the functions, operations, or processes described in the above-mentioned embodiments, variations, and complements, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

The embodiments, the variations, and the complements according to a non-limiting and exemplary embodiment of the present disclosure have been each described, thus far.

Incidentally, in the present disclosure, ACK/NACK may be referred to as, for example, HARQ-ACK or HARQ-Feedback information. Repetition may also be referred to as, for example, slot aggregation, slot bundling, TTI aggregation, or TTI bundling.

The present disclosure may be applied to, for example, communication between terminals, such as a sidelink communication.

Further, in the present disclosure, a downlink control channel, a downlink data channel, an uplink control channel, and an uplink data channel are not limited to PDCCH, PDSCH, PUCCH, and PUSCH, respectively, and may be control channels having other names.

Further, in the present disclosure, the RRC signaling is assumed for the higher layer signaling, but the signaling may be replaced with Medium Access Control(MAC) signaling and indication by a DCI that is physical layer signaling.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a base station may be adopted instead of a terminal. The base station may be a relay apparatus that relays communication between a higher node and a terminal. The base station may be a roadside unit as well.

### (Uplink/Downlink/Sidelink)

The present disclosure may be applied to any of uplink, downlink and sidelink. The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### <5G NR System Architecture and Protocol Stack>

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

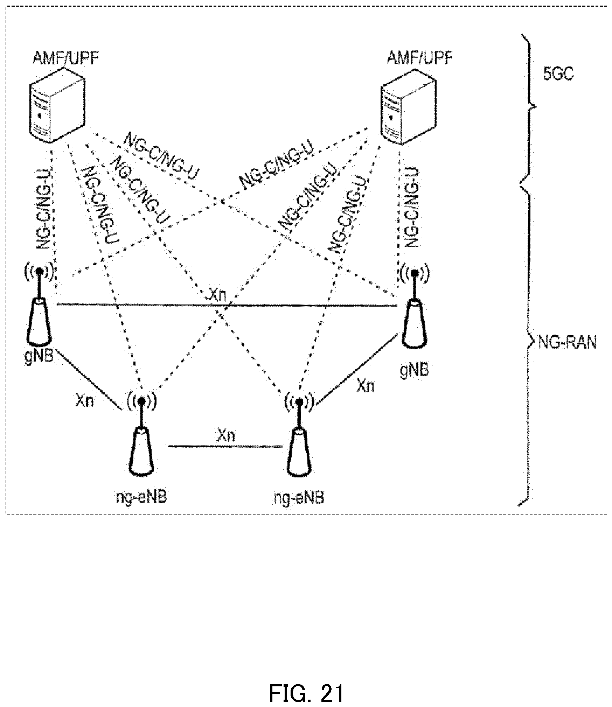

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 21 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). Acontrol plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km² in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

### <Functional Split between NG-RAN and 5GC in 5G NR>

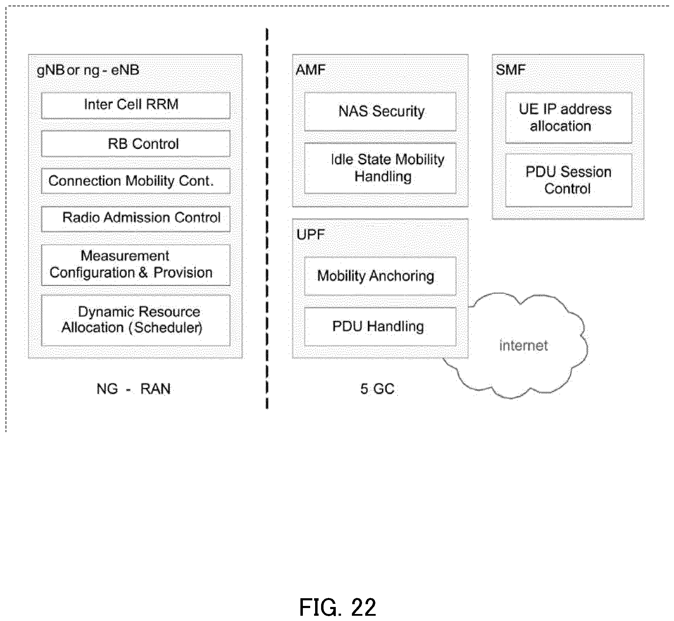

FIG. 22 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:
- Radio Resource Management functions such as Radio Bearer Control, Radio Admission Control, Connection Mobility Control, and dynamic allocation (scheduling) of both uplink and downlink resources to a LTE;
- IP header compression, encryption, and integrity protection of data;
- Selection of an AMF during LTE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:
- Function of Non-Access Stratum (NAS) signaling termination;
- NAS signaling security;
- Access Stratum (AS) security control;
- Inter-Core Network (CN) node signaling for mobility between 3GPP access networks;
- Idle mode LTE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:
- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:
- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

### <RRC Connection Setup and Reconfiguration Procedure>

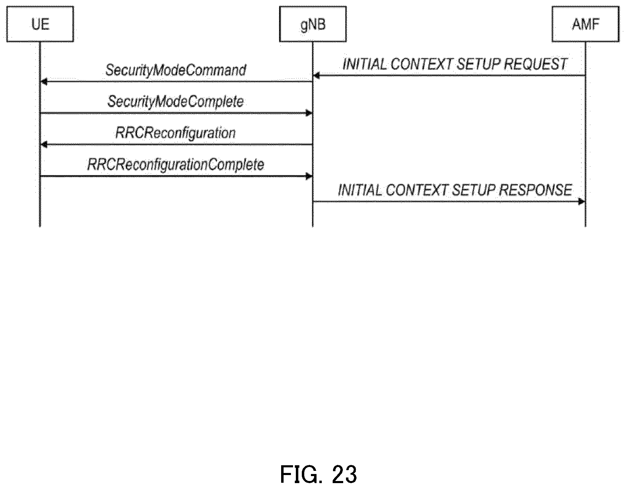

FIG. 23 illustrates some interactions between a UE, gNB, and AMF (a 5GC Entity) performed in the context of a transition of the LTE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityModeCommand message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL

### CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the LTE performs an uplink transmission or a downlink reception based on the resource allocation configuration.

### <Usage Scenarios of IMT for 2020 and beyond>

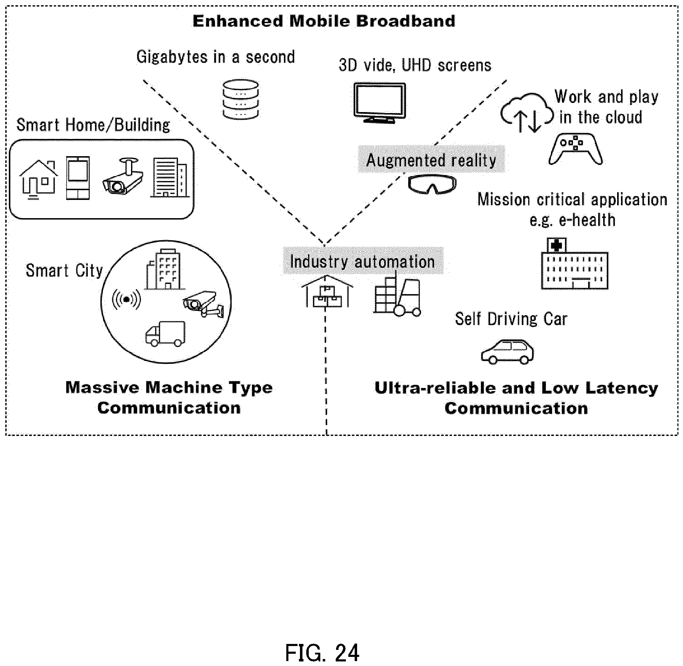

FIG. 24 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 24 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for LTL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and missioncritical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few µs (where the value can be one or a few µs depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

### <QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 23. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the LTE and in the 5GC associate LTL and DL packets with QoS Flows, whereas AS-level mapping rules in the LTE and in the NG-RAN associate LTL and DL QoS Flows with DRBs.

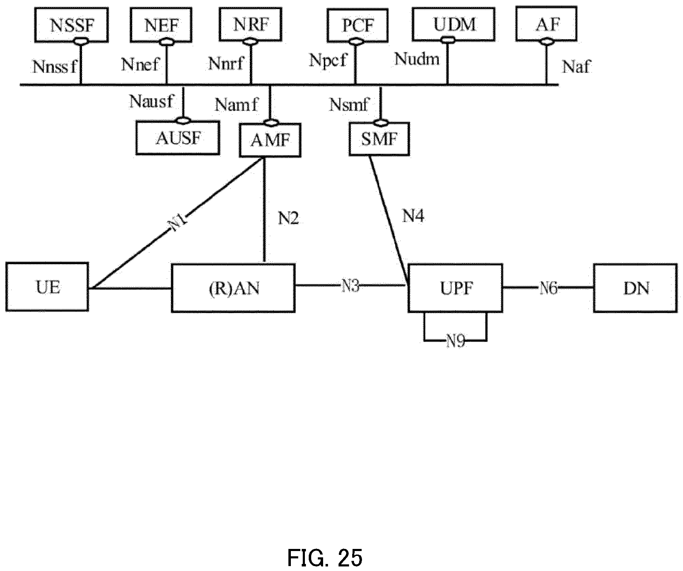

FIG. 25 illustrates a 5G NR non-roaming reference architecture (see TS 23.501 v16.1.0, section 4.23). An Application Function (AF) ( e.g., an external application server hosting 5G services, exemplarily described in FIG. 24) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 25 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

In the description of the present disclosure, the term, such as "part" or "portion" or the term ending with a suffix, such as "-er" "-or" or "-ar" may be interchangeably replaced with another term, such as "circuit (circuitry)," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A terminal according to an exemplary embodiment of the present disclosure includes: reception circuitry, which, in operation, receives, after receiving first downlink control information for allocating a resource for an uplink shared channel, second downlink control information for allocating a resource for a downlink shared channel; and control circuitry, which, in operation, performs control of transmission of the uplink shared channel, based on whether a resource for an uplink control channel overlaps in time with the resource for the uplink shared channel, the uplink control channel being transmitted in response to reception of the downlink shared channel, in which the control of the transmission of the uplink shared channel includes at least one of controlling the number of bits of a signal that is transmitted with the resource for the uplink shared channel, configuring the resource for the uplink shared channel to be unavailable, and/or controlling an HARQ process for the downlink shared channel.

In an exemplary embodiment of the present disclosure, the control circuitry may limit the number of bits to a threshold or less by puncturing a portion of the resource for the uplink shared channel, in a case where the resource for the uplink control channel and the resource for the uplink shared channel overlap in time with each other.

In an exemplary embodiment of the present disclosure, the signal may be an ACK/NACK signal for reception of the downlink shared channel, and the control circuitry may compress, by using ACK/NACK bundling, the number of bits of the ACK/NACK signal to the threshold or less in a case where the number of bits of the ACK/NACK signal exceeds the threshold.

In an exemplary embodiment of the present disclosure, the control circuitry may give priority to transmission of the signal using the uplink control channel over the transmission of the uplink shared channel, and may configure a resource in which the uplink control channel and the uplink shared channel overlap in time with each other as a resource that is unavailable for the transmission of the uplink shared channel.

In an exemplary embodiment of the present disclosure, the control circuitry may configure the HARQ process for the downlink shared channel to be disabled, in a case where the resource for the uplink control channel and the resource for the uplink shared channel overlap in time with each other.

In an exemplary embodiment of the present disclosure, the control circuitry may apply ACK skipping to the HARQ process for the downlink shared channel, in a case where the resource for the uplink control channel and the resource for the uplink shared channel overlap in time with each other.

In an exemplary embodiment of the present disclosure, in a case where transmission of a NACK signal is performed in the ACK skipping, the control circuitry may transmit a signal in which the number of bits is limited to a threshold or less by puncturing a portion of the resource for the uplink shared channel, or may give priority to the transmission of the NACK signal using the uplink control channel and configures a resource in which the uplink control channel and the uplink shared channel overlap in time with each other as a resource that is unavailable for the transmission of the uplink shared channel.

A base station according to an exemplary embodiment of the present disclosure includes: transmission circuitry, which, in operation, transmits, after transmitting first downlink control information for allocating a resource for an uplink shared channel, second downlink control information for allocating a resource for a downlink shared channel; and control circuitry, which, in operation, performs control of reception of the uplink shared channel, based on capability information received from a terminal, in which the capability information indicates whether the terminal controls transmission of the uplink shared channel, based on whether a resource for an uplink control channel overlaps in time with the resource for the uplink shared channel, the uplink control channel being transmitted in response to reception of the downlink shared channel, and the control of the transmission of the uplink shared channel performed by the terminal includes at least one of controlling the number of bits of a signal that is transmitted with the resource for the uplink shared channel, configuring the resource for the uplink shared channel to be unavailable, and/or controlling an HARQ process for the downlink shared channel.

A communication method according to an exemplary embodiment of the present disclosure includes: receiving, by a terminal, after receiving first downlink control information for allocating a resource for an uplink shared channel, second downlink control information for allocating a resource for a downlink shared channel; and controlling, by the terminal, transmission of the uplink shared channel, based on whether a resource for an uplink control channel overlaps in time with the resource for the uplink shared channel, the uplink control channel being transmitted in response to reception of the downlink shared channel, in which the controlling of the transmission of the uplink shared channel includes at least one of controlling the number of bits of a signal that is transmitted with the resource for the uplink shared channel, configuring the resource for the uplink shared channel to be unavailable, and/or controlling an HARQ process for the downlink shared channel.

A communication method according to an exemplary embodiment of the present disclosure includes: transmitting, by a base station, after transmitting first downlink control information for allocating a resource for an uplink shared channel, second downlink control information for allocating a resource for a downlink shared channel; and controlling, by the base station, reception of the uplink shared channel, based on capability information received from a terminal, in which the capability information indicates whether the terminal controls transmission of the uplink shared channel, based on whether a resource for an uplink control channel overlaps in time with the resource for the uplink shared channel, the uplink control channel being transmitted in response to reception of the downlink shared channel, and the control of the transmission of the uplink shared channel performed by the terminal includes at least one of controlling the number of bits of a signal that is transmitted with the resource for the uplink shared channel, configuring the resource for the uplink shared channel to be unavailable, and/or controlling an HARQ process for the downlink shared channel.

The disclosure of Japanese Patent Application No. 2021-041316, filed on March 15, 2021, including the specification, drawings and abstract, is incorporated herein by reference in its entirety.

### Industrial Applicability

An exemplary embodiment of the present disclosure is useful for radio communication systems.

### Reference Signs List

100 Base station
101, 205 Controller
102 Higher-layer control signal generator
103 Downlink control information generator
104, 206 Encoder
105, 207 Modulator
106, 208 Signal assigner
107, 209 Transmitter
108, 201 Receiver
109, 202 Extractor
110, 203 Demodulator
111, 204 Decoder
200 Terminal

## Claims

1. A terminal, comprising:
reception circuitry, which, in operation, receives, after receiving first downlink control information for allocating a resource for an uplink shared channel, second downlink control information for allocating a resource for a downlink shared channel; and
control circuitry, which, in operation, performs control of transmission of the uplink shared channel, based on whether a resource for an uplink control channel overlaps in time with the resource for the uplink shared channel, the uplink control channel being transmitted in response to reception of the downlink shared channel,
wherein
the control of the transmission of the uplink shared channel includes at least one of controlling the number of bits of a signal that is transmitted with the resource for the uplink shared channel, configuring the resource for the uplink shared channel to be unavailable, and/or controlling an HARQ process for the downlink shared channel.

2. The terminal according to claim 1, wherein the control circuitry limits the number of bits to a threshold or less by puncturing a portion of the resource for the uplink shared channel, in a case where the resource for the uplink control channel and the resource for the uplink shared channel overlap in time with each other.

3. The terminal according to claim 2, wherein:
the signal is an ACK/NACK signal for reception of the downlink shared channel, and
the control circuitry compresses, by using ACK/NACK bundling, the number of bits of the ACK/NACK signal to the threshold or less in a case where the number of bits of the ACK/NACK signal exceeds the threshold.

4. The terminal according to claim 1, wherein the control circuitry gives priority to transmission of the signal using the uplink control channel over the transmission of the uplink shared channel, and configures a resource in which the uplink control channel and the uplink shared channel overlap in time with each other as a resource that is unavailable for the transmission of the uplink shared channel.

5. The terminal according to claim 1, wherein the control circuitry configures the HARQ process for the downlink shared channel to be disabled, in a case where the resource for the uplink control channel and the resource for the uplink shared channel overlap in time with each other.

6. The terminal according to claim 1, wherein the control circuitry applies ACK skipping to the HARQ process for the downlink shared channel, in a case where the resource for the uplink control channel and the resource for the uplink shared channel overlap in time with each other.

7. The terminal according to claim 6, wherein, in a case where transmission of a NACK signal is performed in the ACK skipping, the control circuitry transmits a signal in which the number of bits is limited to a threshold or less by puncturing a portion of the resource for the uplink shared channel, or gives priority to the transmission of the NACK signal using the uplink control channel and configures a resource in which the uplink control channel and the uplink shared channel overlap in time with each other as a resource that is unavailable for the transmission of the uplink shared channel.

8. A base station, comprising:
transmission circuitry, which, in operation, transmits, after transmitting first downlink control information for allocating a resource for an uplink shared channel, second downlink control information for allocating a resource for a downlink shared channel; and
control circuitry, which, in operation, performs control of reception of the uplink shared channel, based on capability information received from a terminal,
wherein
the capability information indicates whether the terminal controls transmission of the uplink shared channel, based on whether a resource for an uplink control channel overlaps in time with the resource for the uplink shared channel, the uplink control channel being transmitted in response to reception of the downlink shared channel, and
the control of the transmission of the uplink shared channel performed by the terminal includes at least one of controlling the number of bits of a signal that is transmitted with the resource for the uplink shared channel, configuring the resource for the uplink shared channel to be unavailable, and/or controlling an HARQ process for the downlink shared channel.

9. A communication method, comprising:
receiving, by a terminal, after receiving first downlink control information for allocating a resource for an uplink shared channel, second downlink control information for allocating a resource for a downlink shared channel; and
controlling, by the terminal, transmission of the uplink shared channel, based on whether a resource for an uplink control channel overlaps in time with the resource for the uplink shared channel, the uplink control channel being transmitted in response to reception of the downlink shared channel,
wherein
the controlling of the transmission of the uplink shared channel includes at least one of controlling the number of bits of a signal that is transmitted with the resource for the uplink shared channel, configuring the resource for the uplink shared channel to be unavailable, and/or controlling an HARQ process for the downlink shared channel.

10. A communication method, comprising:
transmitting, by a base station, after transmitting first downlink control information for allocating a resource for an uplink shared channel, second downlink control information for allocating a resource for a downlink shared channel; and
controlling, by the base station, reception of the uplink shared channel, based on capability information received from a terminal,
wherein
the capability information indicates whether the terminal controls transmission of the uplink shared channel, based on whether a resource for an uplink control channel overlaps in time with the resource for the uplink shared channel, the uplink control channel being transmitted in response to reception of the downlink shared channel, and
the control of the transmission of the uplink shared channel performed by the terminal includes at least one of controlling the number of bits of a signal that is transmitted with the resource for the uplink shared channel, configuring the resource for the uplink shared channel to be unavailable, and/or controlling an HARQ process for the downlink shared channel.
